# EUROPÄISCHE PATENTSCHRIFT

(11) **EP 3 969 155 B1**
(45) Veröffentlichungstag und Bekanntmachung des Hinweises auf die Patenterteilung: **19.07.2023**
(21) Anmeldenummer: 20842562.9
(22) Anmeldetag: 18.12.2020
(51) Int. Cl.: B01D 53/75, B01D 53/78, B01D 53/86, B01D 45/08

(54) **VERFAHREN ZUR ABLUFTREINIGUNG**
METHOD FOR PURIFYING EXHAUST AIR
PROCÉDÉ DE PURIFICATION D'AIR VICIÉ

(30) Priorität: 23.01.2020 DE 102020101540
(43) Veröffentlichungstag der Anmeldung: 23.03.2022
(73) Patentinhaber: Kunststoff Helmbrechts Ag, 95233 Helmbrechts (DE)
(72) Erfinder: NEHDI, Sadok, 7032 Bizerte (TN)
(74) Vertreter: Stippl Patentanwälte
(86) Internationale Anmeldenummer: PCT/EP2020/086967
(87) Internationale Veröffentlichungsnummer: WO 2021/148211

(56) Entgegenhaltungen:
- CN-A- 104 436 946
- CN-A- 104 958 990
- CN-A- 105 582 777
- CN-A- 105 817 126
- CN-A- 106 390 739
- CN-A- 106 582 180
- CN-A- 107 149 845
- CN-A- 107 715 581
- CN-A- 108 380 042
- CN-A- 110 013 748
- CN-A- 110 026 056
- CN-A- 110 064 268
- CN-U- 203 764 077
- CN-U- 208 431 874
- KR-A- 20040 050 315
- KR-B1- 101 559 073
- US-A- 4 734 109

## Beschreibung

Die vorliegende Erfindung betrifft ein Verfahren zur Abluftreinigung, insbesondere zur Reinigung der Abluft einer Anlage in der chemischen Industrie, in der Farben sowie Lacke verarbeitenden Industrie, in der Lacke und Farben produzierenden Industrie, in Gießereien, in Raffinerien, in der Lebensmittelindustrie, in der Landwirtschaft, in Krankenhäuser sowie zur Reinigung allgemeiner Gebäudeabluft. Das Verfahren betrifft eine sogenannte Niedertemperatur-Abluftbehandlung und eignet sich ganz besonders für Abluft mit einer maximalen Schadstoffbelastung von 0,5 % bzw. 5g/m³.

### Technologischer Hintergrund

Verfahren zur Behandlung von Abluft im Rahmen dieser Erfindung interessierender Abluftreinigung werden in unterschiedlichsten Bereichen z. B. in der chemischen Industrie, in der Farben sowie Lacke verarbeitenden Industrie, in der Lacke und Farben produzierenden Industrie, in Gießereien, in Raffinerien, in der Lebensmittelindustrie, in der Landwirtschaft, in Krankenhäuser benötigt sowie zur Reinigung allgemeiner Gebäudeabluft verwendet, um vielfältige in der Abluft befindliche Schadstoffe aus der Abluft zu entfernen. Unter einer "Abluftverunreinigung" versteht man eine Situation, bei der ein Fremdstoff in der Abluft seinen maximal erlaubten Anteil in seinem natürlichen Umfeld übersteigt. Verfahren zur Behandlung von Abluft zielen darauf ab, alle festen, flüssigen und/oder gasförmigen Verunreinigungen, die umweltschädlich sind und/oder Gerüche abgeben, zu entfernen. Die Anzahl und Verschiedenheit solcher Verunreinigungen ist sehr umfassend. Es handelt sich insbesondere um organische flüchtige (VOCs) oder halbflüchtige (SVOCs) Verbindungen bzw. Kohlenwasserstoffverbindungen, Kohlenwasserstoffverbindungen ohne Methan (NMHCs), aromatische Kohlenwasserstoffe, schwere Kohlenwasserstoffe, unterschiedlichste Oxide wie NOx, COx, SOx, Bakterien, Viren und schließlich feste Partikel, pastöse Partikel und flüssige Tröpfchen.

Je nach Art der Verunreinigung existieren im Stand der Technik unterschiedlichste Behandlungsmethoden, wie z.B. thermokatalytische Oxidation, photokatalytische Behandlung, Plasmabehandlung, Adsorption, Absorption, Filtermembrane sowie biologische Behandlung. Gängige Behandlungssysteme sind wenig effizient und nicht in der Lage, Multigasverschmutzungen zu behandeln. Behandlungsverfahren werden daher üblicherweise jeweils individuell in ihrer Anwendung konzipiert und sind daher entsprechend aufwendig und kostenintensiv. Wird für eine industrielle Anlage eine Abluftreinigung benötigt, ist es bisher in der Regel notwendig, diese jeweils stets von Grund auf neu zu konzeptionieren. Aufgrund der Vielfältigkeit der in einem Abluftstrom vorkommenden Schadstoffe einerseits sowie den unterschiedlichsten im Stand der Technik bekannten Verfahren andererseits besteht ein grundsätzliches Bedürfnis an kostengünstigen Lösungen, die für einen großen Teil von Anwendungssituationen eine effektive Reinigung der Abluft ermöglichen, ohne dass Anlagen von Grund auf neu konzeptioniert werden müssen.

Speziell im Bereich von Lackieranlagen kommt hinsichtlich der Abluftreinigung erschwerend hinzu, dass in der Ablauft zusätzlich auch Lösungsmittelbestandteile enthalten sind und somit eine Multigasverschmutzung darstellen. Diese sind einerseits schwierig zu separieren, andererseits muss die Abluftreinigung wegen der leichten Entflammbarkeit von Lösungsmittel bei vergleichsweise niedrigen Temperaturen vollzogen werden.

### Druckschriftlicher Stand der Technik

Die CN 107 149 845 A offenbart ein Verfahren zur Abluftreinigung einer Lackieranlage, mit einer ersten Verfahrensstufe, in der Partikel des Abgasstroms aus dem

Abgasstrom hydrodynamisch abgetrennt werden, einer zweiten Verfahrensstufe, in der der Abgasstrom mit UV-Lichtstrahlung beaufschlagt wird, einer dritten Verfahrensstufe, in der der Abgasstrom durch eine Plasmaröhren-Anordnung hindurchströmt.

Aus der CN 203303808 U ist eine Anlage zur Abluftreinigung einer Lackiererei bekannt, bei der die Abluft über eine Anordnung bestehend aus einem fotosensitiven Sensor, einem Papierfilter, einem Zyklon sowie einem weiteren Filter mehreren Adsorptionstanks zugeleitet wird. Die Adsorption erfolgt mit Aktivkohle.

Die CN 105964141 A beschreibt ein Verfahren sowie eine Anlage zur Behandlung von VOCs enthaltender Abluft. Die Anlage umfasst eine Verbrennungskammer sowie eine katalytische Oxidationskammer, die sich an die Verbrennungskammer anschließt. In der katalytischen Oxidationskammer befindet sich ein Fließbett mit einem Metalloxydkatalysator, wie z.B. TiO₂.

Aus der CN 205391955 U ist eine weitere Anlage zur Reinigung der Abluft einer Lackieranlage bekannt, bei der die Abluft zunächst einem Zyklon sowie einer nachfolgenden Gas-/Flüssigkeitstrennkammer zugeführt wird. Nach Abtrennung der flüssigen Bestandteile der Abluft wird letztere in eine Plasmakammer sowie eine anschließende katalytische Oxidationskammer geleitet, bevor die Abluft in die Atmosphäre abgegeben wird.

Aus der CN 104958990 A ist eine Anlage zur Behandlung von Abluft aus einer Lackierkammer bekannt, bei der die Abluft zunächst einen Gaswäscher durchströmt und daraufhin einer Niedertemperaturplasmabehandlung unterzogen wird. Anschließend wird die Abluft unter photokatalytischer Wirkung über eine Kohlefaser aufweisende Absorptionsschicht geleitet.

### Aufgabe der vorliegenden Erfindung

Die Aufgabe der vorliegenden Erfindung besteht darin, ein gattungsgemäßes Verfahren zur Verfügung zu stellen, welches in verschiedenen Industriebereichen einfach und kostengünstig implementiert werden kann jedoch bereits eine gute Grundreinigungseffizienz bezüglich vielfältiger Schadstoffe gewährleistet.

### Lösung der Aufgabe

Die vorliegende Aufgabe wird durch ein Verfahren gemäß Anspruch 1 gelöst.

Zweckmäßige Ausgestaltungen des erfindungsgemäßen Verfahrens bzw. der beanspruchten Komponenten sind in den jeweils abhängigen Ansprüchen beansprucht.

Die vorliegende Erfindung betrifft ein Verfahren zur Abluftreinigung, vorzugsweise zur Abluftreinigung einer Lackieranlage, mit folgenden Verfahrensstufen:
Erste Verfahrensstufe, in der Partikel des Abgasstroms aus dem Abgasstrom hydrodynamisch abgetrennt werden. Im Rahmen dieser Verfahrensstufe wird das Abgas auf einen Wasservorhang geleitet, wodurch flüssige und feste (z.B. Lackreste) Partikel abgeschieden werden können; und/oder
zweite Verfahrensstufe, in der der Abgasstrom mit Photonenstrahlung, vorzugsweise mit UV- und/oder IR-Strahlung und/oder mit Mikrowellenenergie beaufschlagt wird. Die UV- und/oder IR-Bestrahlung vernetzt und/oder polymerisiert noch nicht miteinander reagierte (bzw. nicht ausgehärtete) Komponenten, z.B. Lackkomponenten der Abluft. Der Einsatz von Mikrowellenenergie hat den Effekt, dass die Wassermoleküle in der Abluft energetisch angeregt werden, wodurch es zwischen den Verunreinigungen in der Abluft zu Kollisionen kommt und Verunreinigungen als Folge davon miteinander agglomerieren (verklumpen); und/oder
dritte Verfahrensstufe, in der der Abgasstrom durch eine Magnetanordnung und anschließend durch eine Plasmaröhren-Anordnung geleitet wird. Durch die Magnetanordnung werden längere Moleküle, insbesondere NMHC und KWS (Kohlenwasserstoff)-Moleküle, in Strömungsrichtung ausgerichtet bzw. gestreckt und können aufgrund dessen nachträglich leichter zersetzt werden. In der Plasmaröhren-Anordnung werden langkettige Kohlenstoffmoleküle anschließend zu CO₂ und H₂O und zu kurzkettigen Molekülen zerlegt sowie H₂O oder Radikale aus dem kurzkettigen Molekül durch aktive Oxidanten auf Basis von O und/oder N gebildet. Die aktiven Oxidanten befinden sich im Plasma in der Gasphase. Diese aktiven Oxidanten können die Schadstoffe selbst angreifen, und zwar insbesondere durch Totaloxidation oder durch Abbau. Die aktiven Oxidanten können aber auch mit den Schadstoffen rekombinieren, um wiederum Wirkstoffe [O₃, HO₂, RO₂, RO, H₂O₂] zu ergeben, die wiederum Schadstoffe abbauen bzw. angreifen. Schließlich können die aktiven Oxidanten auch zu neuen aktiven Wirkstoffen [N₂, O₂, H₂O₂] kombinieren, die wiederum die Schadstoffe abbauen bzw. angreifen; und/oder
vierte Verfahrensstufe, in der der Abgasstrom einen ersten Zyklongaswäscher, in dem der Abgasstrom unter Photonenstrahlung vorzugsweise unter UV- und/oder IR-Strahlung mit einer vorzugsweise basischen Reaktionsflüssigkeit oder chemischen Lösung kontaktiert wird, und einen zweiten Zyklongaswäscher, in dem der Abgasstrom unter Photonentstrahlung vorzugsweise unter UV- und/oder IR-Strahlung mit einer vorzugsweise sauren Reaktionsflüssigkeit oder chemischen Lösung kontaktiert wird, durchströmt. Die vierte Verfahrensstufe dient vornehmlich zum Entfernen von polaren Molekülen (z.B. Ester, Ether, Säuren) durch den ersten Zyklongaswäscher sowie zum Entfernen von Molekülen mit Doppel- oder Dreifachbindungen (z.B. Alkene, Alkine, aromatische Verbindungen, toxische Verbindungen) sowie schweren Alkoholen durch den zweiten Zyklongaswäscher. Durch die UV- und/oder IR-Strahlung werden die jeweils chemischen Reaktionen zusätzlich photokatalytisch beschleunigt. Die Bestrahlung mit UV- und/oder IR-Strahlung hat zusätzlich den Effekt, dass parasitäre Reaktionen unter Bildung von toxischen Reaktionsprodukten vermieden werden; und/oder
fünfte Verfahrensstufe, in der der Abgasstrom eine erste Katalysatorkammer mit verteilten Katalysatorelementen, eine Magnetanordnung sowie eine zweite Katalysatorkammer mit verteilten Katalysatorelementen durchströmt. In dieser Verfahrensstufe werden vornehmlich VOCs sowie NMHCs unter Einwirkung von Ozon zu CO₂ und H₂O oxidiert.

Sogar Schadstoffe oder Schadstoffanteile biologischen Ursprungs können mit den oben genannten Verfahrensstufen behandelt werden. Bei Schadstoffen biologischen Ursprungs handelt es sich im Wesentlichen um Mikroben (Viren, Bakterien, Einzeller, Legionellen usw.) Schimmelpilzen und Allergenen. Diese Verunreinigungen können als Partikel betrachtet werden und werden in der ersten Verfahrensstufe behandelt, indem sie dort einer chemischen Lösung ausgesetzt werden, die die Membran dieser Mikroorganismen angreift. In der dritten Verfahrensstufe werden diese Schadstoffe einem elektrischen Hochspannungsfeld ausgesetzt, welches eine mechanische Zerstörung der Membran bewirkt. Eine Behandlung mit Plasma sowie eine stark oxidierende chemische Wäsche, begleitet von einer keimtötenden UV-Behandlung in der vierten Verfahrensstufe tötet Mikroorganismen wirksam ab.

Mit einer Kombination oder Unterkombination der oben genannten Verfahrensstufen kann somit überraschend bereits auf vergleichsweise einfache und kostengünstige Weise je nach Bedarf bereits eine hohe Grundreinigungswirkung der Abluft mit einer Effizienz erreicht werden, die den üblichen behördlichen Grenzwerten entspricht. Insbesondere kann eine Kombination oder Unterkombination der Verfahrensstufen gemäß dem erfindungsgemäßen Verfahren als vereinheitlichte Grundkonzeption auch für eine hochwirksame Niedertemperatur-Abluftreinigung dienen.

Vorzugsweise durchströmt der Abgasstrom die einzelnen Verfahrensstufen in folgender Reihenfolge: erste Verfahrensstufe, zweite Verfahrensstufe, dritte Verfahrensstufe, vierte Verfahrensstufe und/oder fünfte Verfahrensstufe. Es handelt sich somit um eine Partikelfiltration zu Beginn mit einer nachfolgenden trockenen Oxidationsstufe, einer nachfolgenden Nassoxidationsstufe sowie einer Oxidationsstufe durch Hochvoltelektrolyse.

Besonders vorteilhaft ist es, wenn in einer sechsten Verfahrensstufe eine ionische Lösung in den Abgasstrom per Ultraschallenergie eingestäubt wird, der Abgasstrom anschließend eine Ausfällkammer durchströmt und danach einer Hochvoltelektrolyse unterzogen wird. Durch das Einsprühen bzw. Vernebeln der ionischen Lösung wird die Leitfähigkeit der Abluft erhöht, wobei die Ultraschallenergie dafür sorgt, dass sich die ionische Lösung in feinste Tröpfchen zerstäubt, vorzugsweise in Tröpfchen mit einem Durchmesser von kleiner 3µm. Durch die Ladungen (Ionen), die sich in der mit den Tröpfchen angereicherten Abluft bewegen, werden singuläre Magnetfelder erzeugt, die die Partikel durch Induktion magnetisieren. Als Folge davon ziehen sich die Partikel gegenseitig entweder durch Magnetismus oder durch Polarisation an und fallen in der Ausfällkammer aus. Die Ausfällkammer bewirkt aufgrund ihres vergrößerten Volumens die Funktion eines Druckreduzierventils mit der Folge einer innigen Vermischung der Abluft mit dem durch den Einspritzvorgang entstehenden Nebel und der dadurch in Gang gesetzten Agglomeration der in der Abluft enthaltenen Partikel. Durch diese Behandlung und durch die sich daran anschließende Hochspannungselektrolyse werden Radikale aus den längeren Molekülketten der Verunreinigungen der Abluft erzeugt, die wiederum eine positive Auswirkung auf nachstehende Verfahrensstufen haben. Darüber hinaus bzw. unabhängig davon bewirkt die Hochspannungselektrolyse auch die Produktion stark oxidierender chemischer Elemente wie OH*, O*, die ebenfalls eine positive Auswirkung auf nachstehende Verfahrensstufen haben.

Die Hochspannungselektrolyse kann unipolar oder bipolar konzipiert sein. Sie kann Elektroden aus einem Halbleiter (z.B. Titanoxid) und/oder einem Metall (z.B. Titan, Eisen, Aluminium, Edelstahl, etc.) umfassen. Zweckmäßigerweise können die Elektroden eine Wellenform besitzen, um durch die dadurch entstehenden Turbulenzen die Kollision zwischen den Gasmolekülen und den Elektroden zu erhöhen. Die ionische Lösung einschließlich der ausgefällten Partikel kann zweckmäßigerweise in der Ausfällkammer abgezogen, gereinigt und dem Prozess wieder zugeführt werden.

Besonders vorteilhaft ist es, wenn sich die sechste Verfahrensstufe zwischen der dritten und vierten Verfahrensstufe befindet. Denn durch die Hochspannungselektrolyse werden Radikale erzeugt, welche die langen Verunreinigungsmoleküle in mehrere kleinere Moleküle zerlegen, sodass diese leichter in der nachfolgenden vierten Verfahrensstufe behandelt werden können.

Vorteilhaft ist es, wenn der Abgasstrom in einer siebten Verfahrensstufe einen dritten Zyklongaswäscher durchströmt, in dem der Abgasstrom einem photokatalytischen Nassprozess zur Reduktion und Ausfällung von Oxiden unterzogen wird.

Ebenso ist es vorteilhaft, wenn sich die siebte Verfahrensstufe an die fünfte Verfahrensstufe anschließt, da die in der fünften Verfahrensstufe erzeugten Oxidationsprodukte dann in der nachfolgenden siebten Verfahrensstufe abgetrennt werden können.

Gemäß einer besonderen Ausgestaltung der vorliegenden Erfindung wird die basische bzw. saure Reaktionsflüssigkeit oder chemische Lösung im Zuführungsbereich zum zylindrischen Gehäuseteil und/oder innerhalb des zylindrischen Gehäuseteils des jeweiligen Zyklongaswäschers eingesprüht. Insbesondere kann das Einsprühen innerhalb des zylindrischen Gehäuseteils derart erfolgen, dass sich ein schraubenförmiger Bewegungspfad des Flüssigkeitsabgasgemisches innerhalb des Zyklongaswäschers nach unten einstellt. Hierdurch wird die Dichte des Flüssigkeitsgasgemisches und die Durchmischung weiter erhöht, das Gemisch wird somit dichter und/oder schwerer, sodass aufgrund der schraubenförmigen Bewegung und der Zentrifugalkraft die Verunreinigungen eine erhöhte Kontaktwahrscheinlichkeit mit der chemischen Lösung haben, in der die chemischen Reaktionen stattfinden.

Dadurch, dass der Abgasstrom im Zuführungsbereich zum zylindrischen Gehäuseteil des jeweiligen Zyklongaswäschers, vorzugsweise vor oder im Bereich einer Venturi- oder Halbventuridüse, eingesprüht bzw. vernebelt wird, wird ein heterogenes Gas-Wasser-Gemisch vor dem Eintritt der Abluft in den Zyklongaswäscher gebildet, welches schwerer ist als Luft. Darüber hinaus unterstützt dieser Vorgang die erforderliche chemische Reaktion durch Vergrößerung der Kontaktfläche zwischen der jeweiligen chemischen Lösung und der Abluft, da sehr feine Tröpfchen in diesem Bereich gebildet werden. Durch das Vernebeln vor oder im Bereich der Venturi- oder Halbventuridüse wird der Kontakt zwischen den Tröpfchen der chemischen Lösung und dem Abgas noch zusätzlich intensiviert und die chemischen Reaktionen noch gefördert. Vorzugsweise kann hierbei das Einsprühen über eine sogenannte Elektroimpulsdüse erfolgen. Hierbei handelt es sich um eine Düse, die den die Düse verlassenden Strom an chemischer Lösung unter elektrischen Strom setzt, wodurch Radikale erzeugt bzw. abgespalten werden, die mit den Bestandteilen des Abgases chemische Verbindungen eingehen. Andererseits werden durch die Elektroimpulsdüse stark oxidierende Oxidanten wie OH*, O₂, O* sowie der Reduktor H₂ gebildet, welche das Abgas angreifen.

Vorzugsweise wird bzw. werden mit der basischen chemischen Lösung dem Abgasstrom Oxidationsmittel und/oder ein Katalysator zugeführt. Die basische chemische Lösung umfasst insbesondere chemische Lösungen aus KOH, NaOH oder Ca(OH)₂ sowie einen Katalysator, wie z.B. KMnO₄, oder V₂O₅. Ermöglicht werden hierdurch Säure-Basen-Reaktionen, Oxidationsreaktionen für aliphatischen Kohlenwasserstoff, der Doppel- oder Dreifachverbindungen enthält, Thiole, Thioether, Reduktionsreaktionen, Substitutionsreaktionen sowie Mineral-Oxid-Reaktionen.

Mit der sauren chemischen Lösung können dem Abgasstrom Oxidationsmittel und/oder ein Katalysator zugeführt werden. Als saure Reaktionsflüssigkeit bzw. chemische Lösung kann z.B. H₂SO₄ verwendet werden, als chemischer Katalysator beispielsweise V₂O₅. Behandelt werden hierbei Moleküle mit Doppelbindung (Alkene), Dreifachbindung (Alkine), aromatische Verbindungen, Amine usw. Die Reaktionen bauen auch toxische Verbindungen ab, die zuvor durch parasitäre oder andere Reaktionen gebildet worden sein könnten. Als Katalysatoren können K₂Co₂O₇, V₂O₅, oder Na₂CO₃ zum Einsatz kommen.

Dadurch dass der Abgasstrom in der ersten Verfahrensstufe auf eine mit Perforationen versehene, vorzugsweise mit einer Waschflüssigkeit zur Bildung eines Waschflüssigkeitsvorhangs beaufschlagte, vorzugsweise ein erstes sowie zweites Faltblech umfassende, Prallblechanordnung geleitet wird, wird erreicht, dass vor allem schwere Partikel und schlammförmige Konsistenz (z.B. Farbschlamm) an der Prallblechanordnung anhaften und mittels des Waschflüssigkeitsvorgangs von der Prallblechanordnung abgewaschen werden. Durch das erste und zweite Faltblech wird eine Filterbarriere geschaffen, bei der die Partikel wegen ihrer höheren kinetischen Energie in dem Wasservorhang am zweiten Faltblech gefangen werden, wohingegen die Luft auf beiden Seiten des zweiten Faltblechs entweichen kann.

Gemäß einer vorteilhaften Ausgestaltung kann die Prallblechanordnung, vorzugsweise das zweite Faltblech derselben, mit Ultraschall beschallt werden, was zur Folge hat, dass die Wassermoleküle in Schwingung versetzt werden und eine Anhaftung am zweiten Faltblech vermieden werden kann.

Der Magnetanordnung der dritten Verfahrensstufe kann ein Tröpfchenabscheider vorgeschaltet sein. Dieser dient dazu, Flüssigkeit bzw. Wasser, welche(s) in den vorangegangenen Schritten hinzugefügt worden ist, abzuscheiden. Hierdurch wird auch eine elektrische Leitfähigkeit der Abluft vermieden, die ein Sicherheitsrisiko darstellen würde und eine Beschädigung der Plasmarohre verursachen könnte.

Dadurch, dass das Plasma in der dritten Verfahrensstufe mit Photonen, vorzugsweise UV-Licht und/oder IR-Licht bestrahlt wird, wird der für die Behandlung erforderliche Katalysator aktiviert.

Die Beschallung des Plasmas in der dritten Verfahrensstufe mit Ultraschall bewirkt eine Erhöhung der Effektivität des Plasmas, da mittels einer Resonanzultraschallwelle, bei der es sich insbesondere um eine "stehende Welle" handelt, im Inneren der Plasmaröhren im Wechsel Bereiche mit größerer sowie geringerer Dichte geschaffen werden. Hierdurch wird wiederum das Zerlegen von langkettigen VOC-Molekülen zu CO₂ und H₂O oder zu kürzeren Molekülketten unterstützt.

Zweckmäßigerweise wird in der ersten Katalysatorkammer der fünften Verfahrensstufe unter UV- und/oder IR-Bestrahlung Ozon erzeugt, wobei das erzeugte Ozon in der zweiten Katalysatorkammer unter UV- und/oder IR Bestrahlung Bestandteile des Abgasstroms oxidiert. Hierdurch werden in der zweiten Katalysatorkammer VOCs sowie NMHCs mit Ozon zu CO₂ und H₂O oxidiert.

Das erfindungsgemäße Verfahren kann in vorteilhafterweise als geschlossener Kreislauf betrieben werden. Hierzu kann in einer Wasseraufbereitungsstufe das Wasser von den an den einzelnen Verfahrensstufen abgetrennten Fluiden und festen Bestandteilen aufgefangen, gereinigt und dem Prozess der Abluftreinigung wieder zugeführt werden. Dies ist besonders vorteilhaft, da hierdurch die Betriebskosten der Abluftreinigung erheblich reduziert werden können.

Das erfindungsgemäße Verfahren eignet sich ganz besonders für Abluft mit einer Feststoffbeladung von bis zu 0,5 % bzw. 5g/m³.

Das erfindungsgemäße Verfahren ermöglicht einen Abgasdurchsatz von mehr als 20.000 qm³/h.

Der vorzugsweise für den Einsatz in dem vorbeschriebenen Verfahren vorgesehene Zyklongaswäscher umfasst ein Zyklon-förmiges Gehäuses, welches einen zylindrischen oberseitigen Gehäuseabschnitt sowie einen konischen unterseitigen Gehäuseabschnitt aufweist, wobei mehrere Einspritzdüsen vorgesehen sind, welche insbesondere entlang des Umfangs des zylindrischen oberseitigen Gehäuseabschnitts, vorzugsweise spiralförmig positioniert, angeordnet sind. Der Zyklongaswäscher ermöglicht einen besonders intensiven Kontakt der einzusprühenden chemischen Lösung mit der Abluft.

Ein einlaufseitig vorgesehenes Venturirohr oder Halbventurirohr erhöht die Einströmgeschwindigkeit der Abluft in den Zyklongaswäscher. Besonders vorteilhaft ist es, wenn im Bereich des Venturirohrs oder Halbventurirohrs eine Düse zum Einsprühen der chemischen Lösung vorgesehen ist. Zweckmäßigerweise kann diese Düse vorzugsweise als Elektroimpulsdüse ausgebildet sein.

Die UV- und/oder IR-Strahler oberhalb des Zyklon-förmigen Gehäuses, vorzugsweise unterhalb der Einspritzdüsen, dienen dazu, die chemischen Reaktionen innerhalb des Zylkongaswäschers photokatalytisch zu beschleunigen.

Am Ausgang des Zyklongaswäschers ist vorzugsweise ein Tröpfchenabscheider vorgesehen, um die im Zyklon gebildete Flüssigkeit bzw. das vorhandene Wasser nicht in die nachfolgende Behandlungsstufe zu verschleppen.

Der Zyklongaswäscher kann zweckmäßigerweise einen Tank zur Bereitstellung von chemischer Lösung sowie eine erste Zuleitung von dem Tank zu den einzelnen Einspritzdüsen aufweisen, in der sich eine Förderpumpe befindet, sowie eine zweite Zuleitung von dem Tank zu dem Venturirohr oder Halbventurirohr, wobei vorzugsweise die zweite Zuleitung eine weitere Förderpumpe, insbesondere eine Hochdruck-Förderpumpe, aufweist. Hierdurch kann die chemische Lösung im Einlaufbereich des Zyklongaswäschers mit besonderer Intensität vernebelt werden. Hierdurch kann wiederum eine sehr günstige innige Vermischung der chemischen Lösung mit dem Abgasstrom erzeugt werden.

Bei einer zweckmäßigen Ausgestaltung kann sich an den Auslass des Zyklongaswäschers ein Venturirohr anschließen, welches vorzugsweise ebenfalls eine Einspritzdüse für die chemische Lösung aufweist. Auf diese Weise wird auch die den Zyklongaswäscher verlassende Abluft nochmalig mit chemischer Lösung beaufschlagt.

Das insbesondere in dem Verfahren zur Abluftreinigung zu verwendende Plasmamodul umfasst ein Gehäuse mit einem Einlass sowie einem Auslass, eine mindestens einen, vorzugsweise eine eine Mehrzahl von insbesondere in Längsrichtung des Plasmamoduls orientierte, Durchlasskanäle umfassende Magnet-, insbesondere Permanentmagnetanordnung, insbesondere mit jeweils bezogen auf den Querschnitt des Durchlasskanals gegenüberliegender abstoßender magnetischer Kraftwirkung sowie auslassseitig mindestens eine, vorzugsweise eine Mehrzahl von vorzugsweise in Längsrichtung des Plasmamoduls orientierten zum Auslass hin verlaufenden Kathodenröhren mit innenliegenden Anoden.

Die Durchlasskanäle können innerhalb der Magnetanordnung eine zur Fließrichtung der Abluft querverlaufende schlitzartige Form aufweisen. Im Bereich des Einlasses ist vorzugsweise ein Tröpfchenabscheider vorgesehen. In der Magnetanordnung werden langkettige Kohlenstoff-Moleküle (VOCs, NMHCs etc.) ausgerichtet, wodurch deren Zerlegung zu CO₂ und H₂O oder zu kurzkettigen Molekülen in der oder den nachfolgenden Kathodenröhren erleichtert wird.

Die Kathodenröhre bzw. Kathodenröhren sind vorzugsweise mit einem katalytischen Halbleiter, z.B. TiO₂, ZnO, beschichtet.

Die Lichtelemente in dem Plasmamodul, vorzugsweise in Form von UV-Lichtelementen dienen dazu, die Katalysatoren im Bereich der Kathodenröhren zu aktivieren.

Vorzugsweise ist im Plasmamodul eine Schallquelle vorgesehen, die insbesondere zwischen der Magnetanordnung sowie der oder den Kathodenröhren positioniert sein kann. Sie dient dazu, Resonanz-Schallwellen zu erzeugen, die im Inneren der Kathodenröhre bzw. Kathodenröhren abwechselnd Bereiche höherer sowie geringerer Dichte der Abluft erzeugen, wodurch die Effizienz des Plasmas erhöht werden kann. Die Bereiche mit höherer Partikeldichte erlauben die Bildung einer Art "weichen" Korona mit den Partikeln als Brücke zwischen der Kathode und der Anode der Kathodenröhre. Hierdurch können viele langkettige Kohlenstoffmoleküle zu CO₂ oder H₂O bzw. zu kurzkettigen Molekülen zerlegt werden. Ferner kann H₂O oder Radikale aus dem kurzkettigen Molekül sowie auch starke Oxidation OH* gebildet werden. Die aktiven Oxidanten befinden sich im Plasma in der Gasphase. Diese aktiven Oxidanten können die Schadstoffe selbst angreifen, und zwar insbesondere durch Totaloxidation oder durch Abbau. Die aktiven Oxidanten können aber auch mit den Schadstoffen rekombinieren, um wiederum Wirkstoffe [O₃, HO₂, RO₂, RO, H₂O₂] zu ergeben, die wiederum Schadstoffe abbauen bzw. angreifen. Schließlich können die aktiven Oxidanten auch zu neuen aktiven Wirkstoffen [N₂, O₂, H₂O₂] kombinieren, die wiederum die Schadstoffe abbauen bzw. angreifen.

Die Prallblechanordnung, die insbesondere in dem eingangs erwähnten Verfahren zur Abluftreinigung zum Einsatz kommen kann, umfasst Folgendes: ein Gehäuse mit Einlass sowie Auslass, ein im Gehäuse angeordnetes, Perforierungen aufweisendes, vorzugsweise eine Mehrzahl parallel zueinander verlaufender Faltungen aufweisendes erstes Prallblech, ein im Gehäuse angeordnetes, Perforierungen aufweisendes, vorzugsweise eine Mehrzahl parallel zueinander verlaufender Faltungen aufweisendes zweites Prallblech, wobei das erste und zweite Prallblech hintereinander positioniert sind und eine oberseitig zu den Prallblechen angeordnete Spüleinrichtung, die insbesondere einzelne Düsen aufweist, vorgesehen ist. Die Prallblechanordnung ermöglicht es, schwere Partikel sowie schlammartige Konsistenz in der Abluft aufzufangen und zu entfernen.

Vorzugsweise können in der Prallblechanordnung, insbesondere an der dem Auslass zugewandten Seite des zweiten Prallblechs, Ultraschallvibratoren vorgesehen sein. Hierdurch wird die Anhaftung der Partikel bzw. des Schlamms an den Prallblechen durch die Waschflüssigkeit vermieden.

Das insbesondere in dem vorbeschriebenen Verfahren zur Abluftreinigung zum Einsatz kommende Polymerisationsmodul besitzt ein Gehäuse mit Einlass sowie Auslass sowie mindestens eine, vorzugsweise eine Mehrzahl von im Gehäuse angeordneter UV- oder IR-Lampen sowie einen ebenfalls im Gehäuse angeordneten Mikrowellenstrahler. Das Polymerisationsmodul dient dazu, solche Bestandteile der Abluft zu polymerisieren, agglomerieren oder auszuhärten, die sich nach wie vor in einer aktiven Phase, d.h. im chemischen Übergang (Einleitung und Ausbreitung) des Monomers hin zur finalen Polymerisation befinden, bei denen also die chemischen Reaktionen in einem vorgelagerten Prozess (Lackieren oder anderer Prozesse) noch nicht abgeschlossen sind. Der Mikrowellenstrahler bzw. die von ihm erzeugten Mikrowellen sorgen dafür, dass Wassermoleküle in der Abluft in Schwingung versetzt werden, um damit die Kollision und anschließende Agglomeration mit den Schmutzstoffen der Abluft zu unterstützen.

Die in Längsrichtung der Strömung orientierten Wände des Polymerisationsmoduls sind vorzugsweise reflektierend ausgebildet. Zweckmäßigerweise kann zusätzlich einlassseitig und/oder auslassseitig, vorzugsweise einlass- und auslassseitig, ebenfalls eine strömungsdurchlässige Reflektorwand vorgesehen sein. Hierdurch kann eine Aushellung des Gehäuses des Polymerisationsmoduls optimiert werden.

Die Reflektorwand kann vorzugsweise aus einzelnen, insbesondere gekrümmt geformten, verspiegelten Lamellen aufgebaut sein, die zueinander beabstandet, vorzugsweise in abwechselnder Ausrichtung, nebeneinander angeordnet sind.

Das UV-Behandlungsmodul, welches in dem eingangs erwähnten Verfahren zur Abluftreinigung verwendet werden kann, mit einem Gehäuse mit Einlass sowie Auslass, einer ersten Katalysatorkammer mit verteilten Katalysatorelementen, einer mindestens einen, vorzugsweise einer Mehrzahl von vorzugsweise in Längsrichtung des UV-Behandlungsmoduls orientierten Durchlasskanälen umfassende Magnet-, insbesondere Permanentmagnetanordnung, insbesondere mit jeweils bezogen auf den Querschnitt des Durchlasskanals gegenüberliegender abstoßender magnetischer Kraftrichtung und einer zweiten Katalysatorkammer mit verteilten Katalysatorelementen. Das UV-Behandlungsmodul dient dazu, die VOCs sowie NMHCs in der Abluft durch Photokatalyse zu oxidieren. Die Magnetanordnung dient einerseits dazu, in der Abluft noch vorhandene langkettige Kohlenwasserstoffmoleküle (VOCs sowie NMHCs) für die Photokatalyse auszurichten sowie die Moleküle durch magnetische Induktion zu erwärmen. Diese Behandlung hilft wiederum dazu, Oxidationsreaktionen der Kohlenwasserstoffmoleküle zu initiieren. Die Durchlasskanäle haben vorzugsweise eine quer zur Hauptströmungsrichtung der Abluft verlaufende schlitzartige Form.

Als besonders vorteilhaft hat sich herausgestellt, wenn die Katalysatorelemente mit Katalysatormaterial (z.B. ZnO oder TiO₂) beschichtete, winkelig zueinander angeordnete Gitterelemente aufweisen, wobei die Gitterelemente eine mehrschichtige rautenartige Struktur mit einzelnen Rauten bilden, in denen sich UV-Lampen befinden. Hierdurch wird bei einem ausreichenden Strömungsdurchsatz eine hohe Reinigungswirkung ermöglicht.

Die erste Katalysatorkammer kann einlassseitig eine Mehrzahl von Ringmagneten aufweisen, die die in der Abluft enthaltenen Verunreinigungen (Schadstoffe) aufgrund ihrer unterschiedlichen magnetischen Eigenschaften (paramagnetisch, diamagnetisch) trennen und aus dem abgetrennten Sauerstoff mittels des durch die UV-Lampen angeregten Katalysators das gewünschte Ozon produzieren. In der ersten Katalysatorkammer wird Ozon erzeugt, mit dem Ziel, damit die VOCs sowie NMHCs in der dritten Kammer zu oxidieren. In der dritten Kammer werden die VOCs und NMHCs zu H₂O und CO₂ mit dem in der ersten Kammer gebildeten Ozon (Os) oxidiert, ebenso wie Radikale R*, NO₂*, SO₂*. Hierbei laufen vornehmlich zwei Arten von chemischen Reaktionen ab. Bei der ersten zerfällt Ozon oder ein Teil davon zu Sauerstoff (O₃ → 3O₂) oder das Ozon reagiert mit Oxiden (z.B. NO + O₃ → NO₂* + O₂) und/oder es bildet Radikale (insbesondere Kohlenwasserstoffradikale). Die zweite Art von chemischen Reaktionen sind Oxidationsreaktionen unter Beteiligung von Sauerstoff.

Um die Produktion giftiger oder schwer zu behandelnder Stoffe zu vermeiden, kann zudem Infrarotstrahlung eingesetzt werden. Diese beschleunigt chemische Reaktionen durch Anregung von Bindungen wie C-C, -C=C-, -C=O, -C=N, -C-H. Die Infrarotstrahlung beschleunigt chemische Oxidationsreaktionen durch Ozon oder Radikale, wie z. B. O*, welche bei der Photokatalyse gebildet werden, durch den Angriff der schwächsten Bindungen.

Dadurch, dass die erste Katalysatorkammer einlassseitig eine Mehrzahl von Ringmagneten aufweist, werden die in der Abluft enthaltenen Verunreinigungen (Schadstoffe) aufgrund ihrer unterschiedlichen magnetischen Eigenschaften (paramagnetisch, diamagnetisch) aufgetrennt.

Zur Optimierung der Bestrahlungswirkung ist einlassseitig und/oder auslassseitig eine strömungsdurchlässige Reflektorwand vorgesehen. Diese entspricht der Reflektorwand, wie sie bereits in dem vorbeschriebenen Polymerisationsmodul zum Einsatz kommt.

Vorzugsweise können die Katalysatorelemente mehrere mit Katalysatormaterial (z.B. ZnO, TiO₂) beschichtete, vorzugsweise zylinderförmige Gitterelemente aufweisen, wobei die Gitterelemente eine mehrschichtige Zylinderstruktur mit einzelnen Zylindern bilden, in denen sich UV-Lampen, vorzugsweise im Mittelbereich der Gitterelemente befinden. Hierdurch wird eine gleichmäßige Strahlungsintensität innerhalb der katalytischen Elemente erreicht.

Dadurch, dass in der zweiten Katalysatorkammer IR-Strahler vorgesehen sind, wird die Produktion giftiger oder schwer zu behandelnder Stoffe in der zweiten Katalysatorkammer vermieden. Die IR-Strahlung beschleunigt chemische Reaktionen durch Anregung von chemischen Bindungen.

### Beschreibung der Erfindung anhand von Ausführungsbeispielen

Eine zweckmäßige Ausgestaltung des erfindungsgemäßen Verfahrens sowie einzelner Verfahrensstufen bzw. Module zum Einsatz in dem betreffenden Verfahren wird bzw. werden anhand von Zeichnungsfiguren nachstehend näher erläutert. Identische, aber wiederkehrende Merkmale sind der Übersichtlichkeit halber lediglich einfach mit Bezugszeichen versehen. Es zeigen:
- Fig. 1: eine stark vereinfachte Gesamtansicht eines Beispiels einer Anordnung zur Durchführung des erfindungsgemäßen Verfahrens zur Abluftreinigung;
- Fig. 2: ein Beispiel einer ersten Verfahrensstufe des in Fig. 1 gezeigten Ablaufs in Form einer Prallblechanordnung sowie deren Bestandteile;
- Fig. 3: eine stark vereinfachte schematische Darstellung einer zweiten Verfahrensstufe des Verfahrens gemäß Fig. 1 in Form eines Polymerisationsmoduls sowie dessen Bestandteile;
- Fig. 4: eine stark vereinfachte Darstellung der dritten Verfahrensstufe des Verfahrens gemäß Fig. 1 in Form eines Plasmamoduls sowie deren Bestandteile;
- Fig. 5: eine stark vereinfachte Darstellung einer sechsten Verfahrensstufe des Verfahrens gemäß Fig. 1 in Form eines Partikelfilters;
- Fig. 6: eine stark vereinfachte Darstellung einer vierten Verfahrensstufe des Verfahrens gemäß Fig. 1 in Form einer Anordnung eines ersten sowie zweiten Zyklongaswäschers;
- Fig. 7: eine stark vereinfachte schematische Darstellung einer fünften Verfahrensstufe in Form eines UV-Behandlungsmoduls sowie deren Bestandteile;
- Fig. 8: eine stark vereinfachte schematische Darstellung einer siebten Verfahrensstufe, in dem die Abluft einer Aktivkohleanordnung ausgesetzt wird; sowie
- Fig. 9: eine stark vereinfachte schematische Darstellung der Wasseraufbereitung des erfindungsgemäßen Verfahrens.

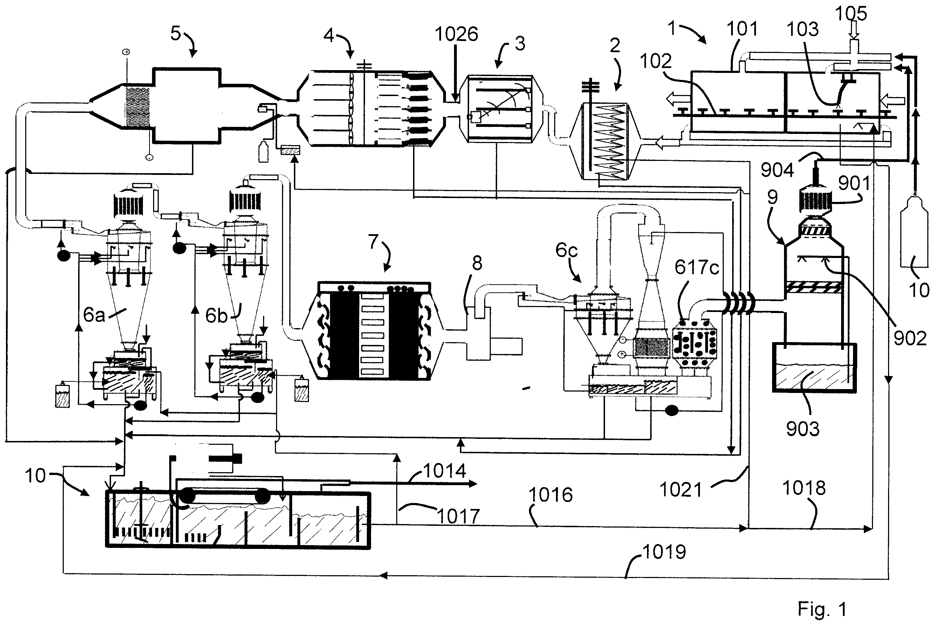

Der Ausgangspunkt des in Fig. 1 gezeigten Verfahrensablaufs kann unterschiedlichster Art sein. In dem in Fig. 1 gezeigten Beispiel handelt es sich um eine Lackieranlage 1 mit einem umlaufenden Förderband 102, auf dem zu lackierende Teile abgelegt sind und die Lackierkabine 101 durchlaufen. Innerhalb der Lackierkabine 101 befinden sich Lackierdüsen 103, die auf die zu lackierenden Teile gerichtet sind. Eine Hauptluftzufuhr erfolgt in die Lackierkabine 101 über eine außerhalb befindliche Luftzufuhr 105. Sauerstoff kann für eine geschlossene Kreislaufführung von einem außenseitigen Reservoir 104 zugeführt werden. Ferner kann gereinigte Abluft zusätzlich auch über eine Rückführleitung 904 wieder zugeführt werden. Wasser wird in aufbereiteter Form ebenfalls aus dem Verfahren gewonnen und in die Lackierkabine 101 rückgeführt. Gleichzeitig wird aufgefangenes Wasser über die Rückführleitung 1019 einer Wasseraufbereitung 10 zugeführt. Die in diesem Bereich anfallende Abluft hat eine Feststoffkonzentration von ca. maximal %.

Die Abluft aus der Lackieranlage 1 enthält vor allem organische flüchtige Verbindungen, insbesondere sogenannte VOCs sowie NMHCs, sowie des weiteren Oxyde, wie NOx, COx SOx und/oder feste, pastöse und/oder flüssige (Tröpfchen) Verunreinigungen.

Ein Gebläse 8 sorgt dafür, dass die Abluft aus der Lackierkabine 101 abgesaugt und eine erste Verfahrensstufe in Form einer Prallblechanordnung 2 durchströmt. Die erste Verfahrensstufe 2 sorgt dafür, dass Partikel des Abgasstroms hydrodynamisch abgetrennt werden.

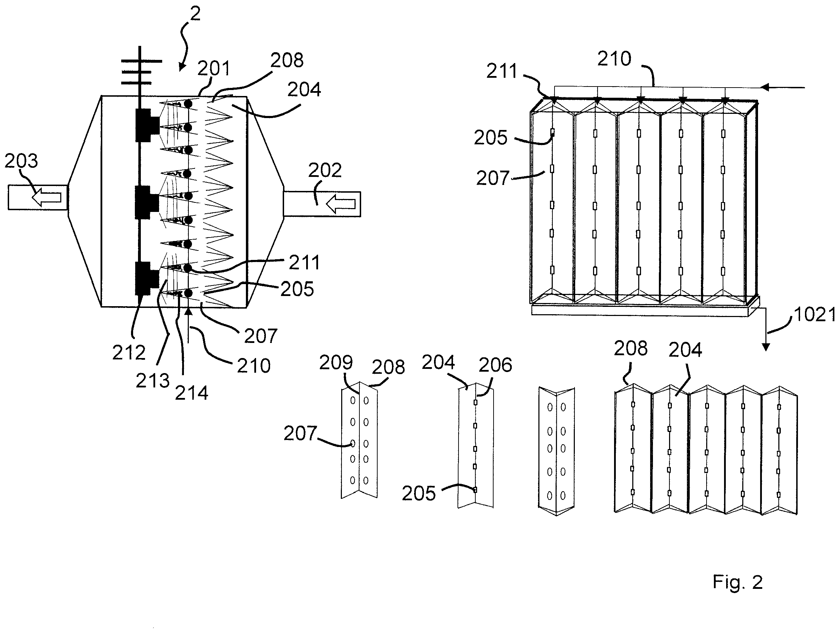

Die Prallblechanordnung 2 umfasst gemäß Fig. 2 einen Einlass 202 sowie Auslass 203 mit einem sich dazwischen befindlichem Gehäuse 201 mit konisch sich erweiterndem Eingang. In dem Gehäuse 201 befindet sich über dessen Querschnitt verteilt eine Anordnung mehrerer erster Prallbleche 204 sowie dahinter positionierter zweiter Prallbleche 208. Die Prallbleche 204, 208 sind jeweils V-förmig ausgebildet und bilden gemeinsam eine ziehharmonikaartige Filterbarriere. Die ersten Prallbleche 204 besitzen eine Mehrzahl von Perforierungen 205, die vorzugsweise entlang der Faltung 206 positioniert sind, wohingegen die zweiten Prallbleche 208 Perforierungen 207 aufweisen, die beidseitig zur Faltung 209 positioniert sind. Die Perforierungen 207 sind vorzugsweise rund oder oval, wohingegen die Perforierungen 205 vorzugsweise rechteckig ausgebildet sind.

An der Oberseite der Prallbleche 204, 208 ist eine Spüleinrichtung 210 mit einzelnen Düsen 211 vorgesehen, mit denen ein Spülvorhang erzeugt werden kann, der den Zwischenraum der zweiten Prallbleche 208 beaufschlagt. Innerhalb der stromabseitigen jeweiligen Spitze der Prallbleche 204, 208 bildet sich jeweils ein Spülstrom 214. An der Unterseite der Prallblechanordnung 2 werden die Spülströme 214 mit den flüssigen sowie festen Verunreinigungen abgezogen und einer Rückführleitung 1021 zu einer Wasseraufbereitung 10 zugeführt, vgl. Fig. 1.

Die zweiten Prallbleche 208 sind an ihrer Rückseite vereinzelt mit Ultraschallvibratoren 212 versehen, mittels denen Ultraschallwellen 213 erzeugt werden können.

Die Aufgabe der zweiten Verfahrensstufe besteht darin, Partikel bzw. Tröpfchen, die viskoser sind als Wasser, zu entfernen.

Die Partikel im Abgasstrom sammeln sich wegen ihrer kinetischen Energie innerhalb der zweiten Prallbleche 208 und werden zusammen mit dem ajeweiligen Spülstrom 214 entlang der zweiten Prallbleche 208 nach unten gespült, wohingegen die gasförmigen Bestandteile um die zweiten Prallbleche 208 herumströmen und die Prallblechanordnung 2 am Auslass 203 verlassen.

Die Beschallung mit Ultraschallenergie bewirkt, dass eine Anhaftung der festen und pastösen Substanzen am zweiten Prallblech 208 vermieden wird.

Die Verfahrensstufe ermöglicht es auch, dass von Zeit zu Zeit eine Reinigung, vorzugsweise automatische Reinigung, durchgeführt wird, indem über die Spüleinrichtung 210 so viel Spülflüssigkeit gepumpt wird, dass diese durch die Öffnungen für den Lufteintritt auf der Lufteintrittsseite und auf der Luftaustrittsseite heraus Rückstände beseitigt werden. Eine derartige Spülung kann ein- oder mehrfach täglich vorgenommen werden.

Zwischen den konischen Bestandteilen ist das Gehäuse 201 in Bezug auf die durchströmte Querschnittsfläche rechteckig ausgebildet.

Die erste Verfahrensstufe bzw. Prallblechanordnung 2 gewährleistet, bei der Anwendung in Zusammenhang mit Lackieranlagen, insbesondere auch eine Entfernung des flüssigen Oversprays.

Die Ziehharmonikaform des ersten und zweiten Prallblechs 204, 208 kann durch ein jeweils durchgehend gefaltetes Blech oder einzelne miteinander verbundene

Blechabschnitte erzeugt sein. Die Prallbleche 204, 208 bestehen vorzugsweise aus Edelstahl.

Die Prallblechanordnung 2 ist modulartig ausgebildet und kann auch unabhängig von dem in Fig. 1 beschriebenen Verfahrensablauf zum Einsatz kommen.

Sobald die Abluft die erste Verfahrensstufe bzw. die Prallblechanordnung 2 verlassen hat, strömt sie gemäß Fig. 1 in eine zweite Verfahrensstufe 3, die ebenfalls modulartig ausgebildet ist. Es handelt sich hierbei um ein Polymerisationsmodul 3, welches die Aufgabe hat, Bestandteile in der Abluft, die sich noch in einer aktiven Phase, d.h. in einem chemischen Übergang des Monomers hin zum finalen Polymer, befinden bzw. die chemischen Reaktion noch nicht abgeschlossen sind, zu polymerisieren, zu agglomerieren oder auszuhärten.

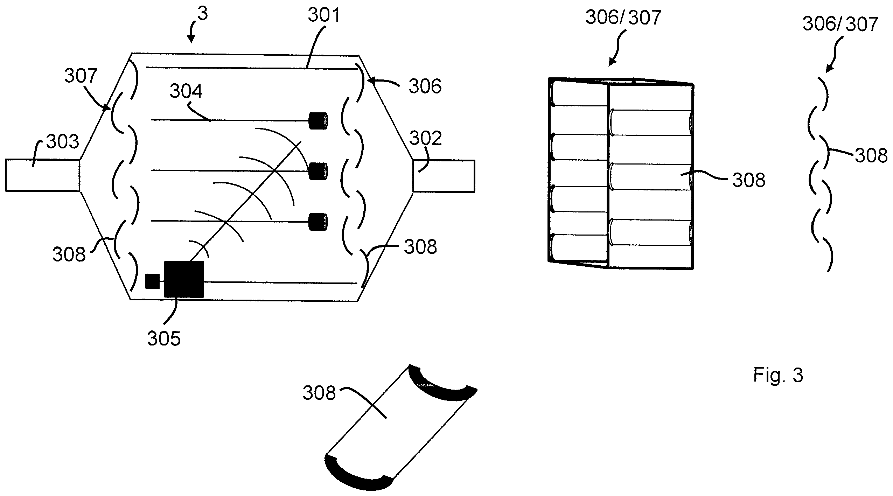

Das Polymerisationsmodul 3 ist in Fig. 3 detaillierter dargestellt. Es umfasst ein Gehäuse 301 mit einem Einlass 302 sowie einem Auslass 303. Im Bereich des Einlasses 302 sowie Auslasses 303 ist das Gehäuse 301 konisch erweitert. Innerhalb des Gehäuses 301 befinden sich mehrere UV- und/oder IR-Lampen, die in dem in Fig. 3 gezeigten Beispiel in Längsrichtung des Polymerisationsmoduls 3 bzw. in Strömungsrichtung der Abluft positioniert sind. Beispielsweise können UV- und/oder IR-LED-Chips entlang von Stäben innerhalb des Gehäuses 301 des Polymerisationsmoduls 3 zum Ausleuchten des Polymerisationsmoduls 3 vorgesehen sein.

Zusätzlich beinhaltet das Polymerisationsmodul 3 einen Mikrowellenstrahler 305, dessen Strahlung die Wassermoleküle in Schwingung versetzt bzw. anregt, wodurch die Kollision und anschließende Agglomeration von Schmutzstoffen in der Abluft unterstützt wird. Die Innenwände in dem nicht konisch geformten Bereich des Gehäuses 301 des Polymerisationsmoduls 3 sind reflektierend ausgebildet , um die Gehäuseaushellung zu optimieren. Ferner ist im Bereich des Einlasses 302 eine erste Reflektorwand 306 sowie im Bereich des Auslasses 303 eine zweite Reflektorwand 307 vorgesehen, die jeweils im Wesentlichen senkrecht zur Strömungsrichtung verlaufend innerhalb des Gehäuses 301 positioniert sind. Die Reflektorwände 306, 307 bewirken eine im Wesentlichen vollständige Reflektionsfähigkeit über die Querschnittsfläche des Gehäuses 301 für UV- bzw. IR-Strahlung bei gleichzeitig ausreichender Strömungsdurchlässigkeit. Das Innere des Gehäuses 301 wirkt deshalb wie ein "Strahlengefängnis". Dies wird dadurch erreicht, dass einzelne gekrümmt ausgebildete Lamellen 308 benachbart zueinander mit leichter Überdeckung, aber zueinander bestehendem Abstand entlang der Querschnittsfläche des Gehäuses 301 des Polymerisationsmoduls 3 angeordnet sind. Durch den Abstand der beiden Reflektorwände 306, 307 zueinander, die Größe der Lamellen 308 sowie deren Positionierung zueinander kann die Reflektion von Licht sowie der Volumendurchsatz festgelegt werden. Das Gehäuse 301 des Polymerisationsmoduls 3 besteht vorzugsweise aus Edelstahl.

Das Polymerisationsmodul 3 kann auch unabhängig von dem in Fig. 1 gezeigten Verfahren zur Anwendung kommen, da es modulartig ausgebildet ist.

Der mit UV- und/oder IR-Licht sowie Mikrowellenenergie behandelte Abluftstrom verlässt gemäß Fig. 1 das Polymerisationsmodul 3 und strömt in ein nachfolgendes Plasmamodul 4. Das Plasmamodul 4 dient dazu, Kohlenstoffmolekülketten (VOCs, NMHCs sowie Gerüche) für eine Plasmabehandlung vorzubereiten.

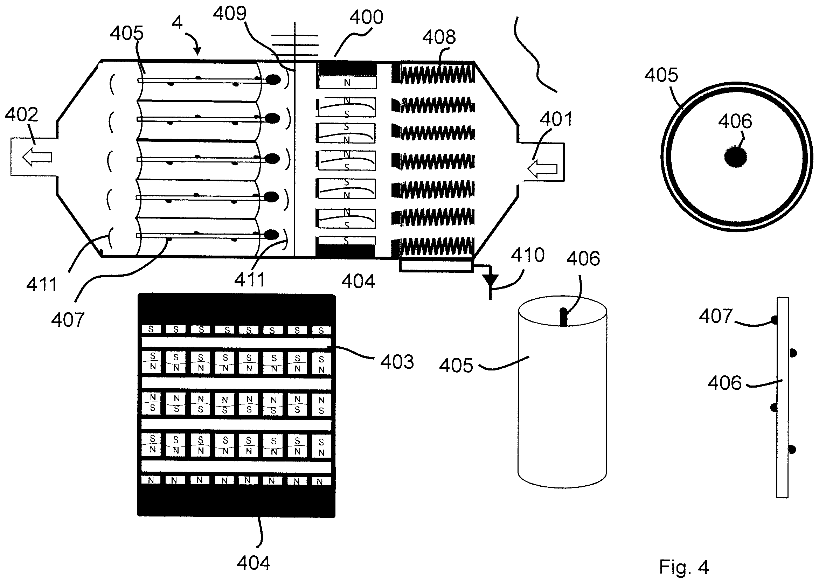

Fig. 4 zeigt die Bestandteile der dritten Verfahrensstufe bzw. des Plasmamoduls 4 etwas detaillierter. Das Plasmamodul 4 umfasst ein Gehäuse 400 mit Einlass 401 sowie Auslass 402. Das Gehäuse 400 besteht vorzugsweise aus Edelstahl und besitzt im Bereich des Einlasses 401 sowie Auslasses 402 jeweils einen konischen sich erweiternden Gehäuseabschnitt. Funktionell ist das Plasmamodul 4 in drei Zonen aufgeteilt. Die einlassseitige erste Zone bildet ein Tröpfchenabscheider 408, welcher dazu vorgesehen ist, der Abluft das Wasser, welches in der ersten Verfahrensstufe (Prallblechanordnung 2) hinzugefügt worden ist bzw. welches sich noch in der Abluft befindet, zu entziehen. Hierdurch wird vermieden, dass die Abluft eine zu hohe elektrische Leitfähigkeit aufweist, wodurch eine Koronabildung vermieden wird. Diese würde ein Sicherheitsrisiko darstellen und zudem eine Beschädigung der Plasmaanordnung verursachen. Das in dem Tröpfchenabscheider 408 abgeschiedene Wasser wird an der Unterseite des Gehäuses 400 aufgefangen und über eine Rückführungsleitung 410 der Wasseraufbereitung 10 zugeführt, vgl. auch Fig. 1.

An den Tröpfchenabscheider 408 schließt sich eine Magnetanordnung 404, vorzugsweise eine Permanentmagnetanordnung, an. Die Magnetanordnung 404 ist über die Querschnittsfläche des Gehäuses 400 verteilt und besitzt eine Vielzahl von in Längsrichtung zum Gehäuse verlaufender, paralleler zueinander angeordneter Durchlasskanäle 403. Die Durchlasskanäle 403 können im Querschnitt gesehen rund, quadratisch oder auch rechteckig bzw. schlitzförmig ausgebildet sein. Im Randbereich eines jeden Durchlasskanals 403 ist eine Magnetisierung (NN; SS) vorgesehen, die jeweils eine abstoßende Wirkung bezogen auf die gegenüberliegenden Seiten des betreffenden Durchlasskanals 403 bewirkt. Die Durchlasskanäle 403 können auch durch Streifen gestapelter Permanentmagneten mit sich gegenüberliegender abstoßender Polarisierung N bzw. S gebildet sein, wie dies in Fig. 4 dargestellt ist. Die Durchlasskanäle 403 sind quer zum Gehäuse 400 des Plasmamoduls 4 verlaufend ausgebildet.

Die Magnetanordnung 404 bewirkt zum einen eine Längsausrichtung oder Streckung von längeren Kohlenstoffmolekülen (VOCs, NMHCs, Gerüche) in Strömungsrichtung, zum anderen induziert sie auch magnetische Hitze oder Wärme, die eine schwache temporäre Polarisierung der Kohlenstoffmolekülen (VOCs, NMHCs, Gerüche) bewirkt.

Ein dritter Teil des Plasmamoduls 4 wird durch eine Mehrzahl parallel angeordneter und über den Querschnitt des Gehäuses 400 verteilter Kathodenröhren 405 mit darin befindlichen Anoden 406 gebildet. Die in der Mitte der jeweiligen Kathodenröhre 405 befindliche Anode 406 ist stabförmig ausgebildet und umfasst eine Mehrzahl von UV-Lichtelementen 407, die an unterschiedlichen Umfangspositionen an der Anode 406 vorgesehen sein können. Die Kathodenröhren 405 bestehen aus einem Bimetall (z. B. Aluminium- und Edelstahl) und sind im Inneren mit einem Katalysator bzw. katalytischem Halbleiter beschichtet, der die Reaktion beschleunigt. Vorzugsweise handelt es sich bei der Beschichtung um TiO₂ oder ZnO.

Zwischen der Magnetanordnung 404 sowie Anordnung der einzelnen Kathodenröhren 405 befindet sich eine Schallwellenquelle 409 zur Erzeugung von Resonanz-Schallwellen, die von Resonanzreflektoren 411 reflektiert werden. Hierdurch werden abwechselnd Bereiche höherer Dichte sowie geringerer Dichte (stehende Welle) erzeugt. Die Bereiche höherer Dichte (Partikel- bzw. Verunreinigungsdichte durch Kohlenwasserstoffverbindungen) erlauben die Ausbildung einer Art "weichen" Korona mit den Partikeln als Brücke zwischen der Kathodenröhre 405 und dem Anodenstab bzw. der Anode 406. Hierdurch können langkettige Kohlenstoffmoleküle zu CO₂ und H₂O bzw. zu kurzkettigen Molekülen zerlegt werden. Ferner werden H₂O sowie Radikale aus den kurzkettigen Molekülen sowie auch starke Oxidanten, wie z. B. OH*, gebildet.

Die aktiven Oxidanten befinden sich im Plasma in der Gasphase. Diese aktiven Oxidanten können die Schadstoffe selbst angreifen, und zwar insbesondere durch Totaloxidation oder durch Abbau. Die aktiven Oxidanten können aber auch mit den Schadstoffen rekombinieren, um wiederum Wirkstoffe [O₃, HO₂, RO₂, RO, H₂O₂] zu ergeben, die wiederum Schadstoffe abbauen bzw. angreifen. Schließlich können die aktiven Oxidanten auch zu neuen aktiven Wirkstoffen [N₂, O₂, H₂O₂] kombinieren, die wiederum die Schadstoffe abbauen bzw. angreifen.

Das Plasmamodul 4 kann auch unabhängig von dem in Fig. 1 beschriebenen Verfahren zum Einsatz kommen.

Die das Plasmamodul 4 am Auslass 402 verlassende Abluft strömt gemäß Fig. 1 anschließend in einen modulartigen Partikelfilter 5.

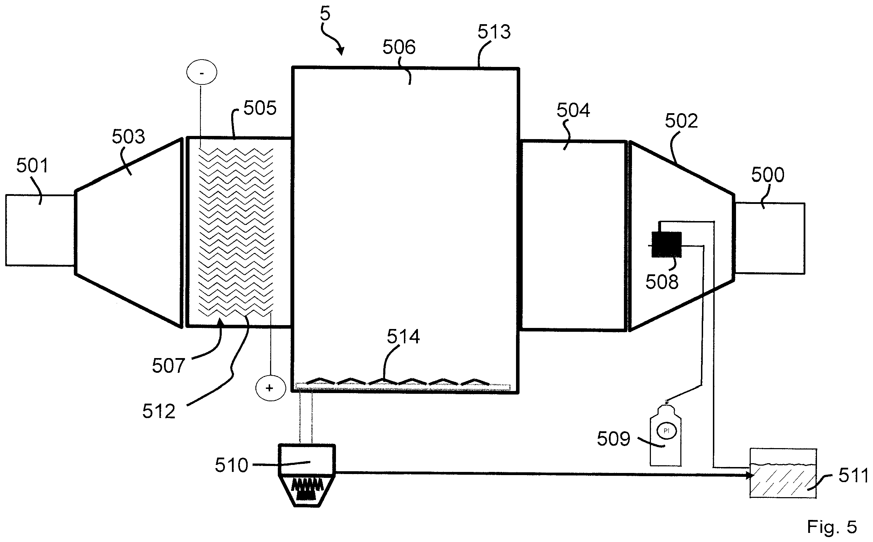

Der Partikelfilter 5 umfasst gemäß Fig. 5 ein Gehäuse 513, welches aufgeteilt ist in einen Einströmbereich, der sich an einen Einlass 500 anschließt. Der Einströmbereich umfasst einen konischen Gehäuseabschnitt 502 sowie einen zylindrischen Gehäuseabschnitt 504. Das Gehäuse 513 kann viereckig oder zylindrisch ausgebildet sein.

An den Einströmbereich schließt sich eine Agglomerationskammer 506 an, die eine größere Querschnittsfläche bzw. ein größeres Volumen (z. B. ein mehr als um einen Faktor 2 größeres Volumen) als der zylindrische oder viereckiger Gehäuseabschnitt 504 des Einströmbereichs aufweist. Danach sind ein weiterer zylindrischer oder viereckiger Gehäuseabschnitt 505 sowie konischer Gehäuseabschnitt 503 vorgesehen, die in einen Auslass 501 übergehen. Der zylindrische Gehäuseabschnitt 505 beherbergt eine Anordnung 507 zur Hochspannungselektrolyse, die einzelne parallel zueinander angeordnete wellenförmige Elektroden 512 aufweist.

Innerhalb des konischen Gehäuseabschnitts 502 ist eine Ultraschalldüse 508 vorgesehen, mit der eine Waschlösung 511 unter Zuhilfenahme von Druckluft 509 in den Abluftstrom eingesprüht wird.

Im Bodenbereich der Agglomerationskammer 506 befindet sich eine Einrichtung 514 zur Aufnahme von flüssigen sowie festen Bestandteilen, die einer Dekantiereinrichtung 510 zugeführt werden. In der Dekantiereinrichtung 510 wird die verbrauchte Waschlösung abgetrennt und dem Prozess wieder zugeführt.

In dem zylindrischen oder viereckigen Gehäuseabschnitt 504 vermengt sich die einströmende Abluft unter sehr großen Turbulenzen mit dem durch das Einsprühen der Waschlösung 511 entstehenden Nebel. Hierdurch wird die elektrische Leitfähigkeit der Abluft mittels der eingebrachten Luftfeuchtigkeit erhöht. Die eingesprühten Tröpfchen besitzen einen Durchmesser von vorzugsweise kleiner 3µm. Diese geringere Tröpfchengröße wird durch den Einsatz der Ultraschalldüse 508 erreicht.

Die Ladungen (Ionen), die sich in der mit Tröpfchen angereicherten Luft bewegen, erzeugen singuläre Magnetfelder, die die Partikel durch Induktion magnetisieren. Deshalb ziehen sie sich entweder durch Magnetismus oder Polarisation an.

Die Agglomerationskammer 506 besitzt ein im Vergleich zum zylindrischen Gehäuseabschnitt 504 mindestens doppelt so großes Volumen, sodass sich das Flüssigkeitsabluftgemisch in der Agglomerationskammer 506 entspannen kann und Partikel aus der Abluft hierdurch schneller agglomerieren bzw. am Boden der Agglomerationskammer 506 sich ansammeln. In der Hochspannungselektrolyse 507 werden Moleküle oder Partikel an den Kathoden sowie Anoden derselben angezogen. Dort werden elektrochemische Reaktionen ausgelöst, welche Radikale aus den längeren Molekülketten der Verunreinigungen erzeugen. Darüber hinaus bilden sich auch andere stark oxidierende chemische Elemente wie OH*, O*.

Die Hochspannungselektrolyse 507 kann unipolar oder bipolar konzipiert sein und enthält Elektroden aus einem Metalloxyd (z.B. Titanoxyd) oder einem Metall (z.B. Titan, Eisen, Aluminium, Edelstahl etc.). Um den Kontakt zwischen der Gasphase und den Elektroden zu verbessern, besitzen die Elektroden der Hochspannungselektrolyse vorzugsweise eine Wellenform.

Im Anschluss an den Partikelfilter 5 strömt die Abluft gemäß Fig. 1 in eine vierte Verfahrensstufe, die einen ersten sowie zweiten Zyklongaswäscher 6a, 6b umfasst. Die beiden Zyklongaswäscher 6a, 6b sind in Serie geschaltet, sodass die Abluft zunächst den Zyklongaswäscher 6a und anschließend den Zyklongaswäscher 6b durchströmt.

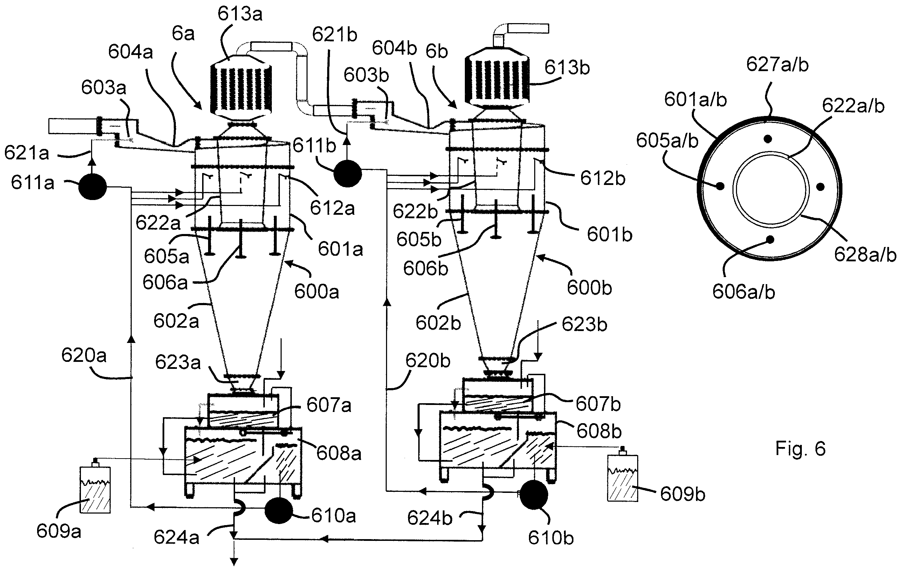

Die Anordnung der beiden Zyklongaswäscher 6a, 6b ist in Fig. 6 im Detail dargestellt. Jeder Zyklongaswäscher 6a, 6b umfasst ein Gehäuse 600a, 600b mit einem oberseitigen zylindrischen Gehäuseabschnitt 601a, 601b sowie einem sich daran an der Unterseite anschließenden unterseitigen kegeligen oder konischen Gehäuseabschnitt 602a, 602b. Unterseitig schließt sich ein Druckausgleichstank 607a, 607b an, in dem Flüssigkeiten und schwerere Bestandteile gesammelt werden. Unterhalb des jeweiligen Druckausgleichstanks 607a, 607b befindet sich ein Tank 608a, 608b, in dem eine chemische Lösung bereitgehalten wird, die dem jeweiligen Zyklongaswäscher 6a, 6b zugeführt wird. In diesem Zusammenhang ist jeweils ein weiterer Tank 609a, 609b vorgesehen, in dem ein Ausgangsmaterial bzw. Konzentrat für die Herstellung der chemischen Lösung bereitgehalten wird.

Im Zulauf des jeweiligen oberseitigen Gehäuseabschnitts 601a, 601b befindet sich jeweils ein Halbventurirohr 604a, 604b, welches dazu dient, die Durchtrittsgeschwindigkeit von Abluft zu erhöhen und damit starke Verwirbelungen zu erzeugen. Vor dem Halbventurirohr 604a, 604b befindet sich eine Einspritzdüse 603a, 603b, welche vorzugsweise als sogenannte Elektroimpulsdüse ausgebildet sein kann. Im Inneren des oberseitigen zylindrischen Gehäuseabschnitts 601a, 601b befinden sich Düsen 612a, 612b, die entweder in gleicher Höhe oder aber unterschiedlicher Höhe in einem schraubenförmigen Verlauf innerhalb des oberseitigen zylindrischen Gehäuseabschnitts 601a, 601b positioniert sein können. Die Düsen 612a, 612b sind seitlich um das mittige Ausgangsrohr 622a, 622b herum angeordnet.

Oberhalb des mittigen Ausgangsrohrs 622a, 622b befindet sich jeweils ein Tröpfchenabscheider 613a, 613b.

Sowohl die Düsen 603a, 603b als auch die Düsen 612a, 612b dienen dazu, chemische Lösung aus dem Tank 608a, 608b einzusprühen.

Hierzu ist eine erste Zuleitung 620a, 620b vorgesehen, über die die chemische Lösung von einer Pumpe 610a, 610b zu den Düsen 612a, 612b gefördert wird. Darüber hinaus ist eine zweite Zuleitung 621a, 621b vorgesehen, über die chemische Lösung unter Hochdruck mittels einer Hochdruck-Förderpumpe 611a, 611b zur jeweiligen Düse 603a, 603b gefördert wird.

Im unterseitigen kegelförmigen Gehäuseabschnitt 602a, 602b sind eine Mehrzahl von UV-Strahlern 605a, 605b und IR-Strahler 606a, 606b vorgesehen. Aufgrund des unter Hochdruck erfolgenden Einsprühens von chemischer Lösung mit der Einspritzdüse 603a, 603b im Bereich des Halbventurirohrs 604a, 604b wird ein Nebel bestehend aus der Abluft sowie den feinen Tröpfchen der chemischen Lösung gebildet, der schwerer ist als Luft und in den Zyklon eintritt. Darüber hinaus ist die Kontaktfläche aufgrund der sehr feinen Tröpfchen vergrößert, um chemische Reaktionen zwischen der chemischen Lösung und den Verunreinigungen der Abluft zu unterstützen. Die Verwendung von Elektroimpulsdüsen als Einspritzdüsen 603a, 603b bewirken eine zusätzliche Beschleunigung des nebelartigen Abluft-Wasser-Gemisches. Die Elektroimpulsdüsen bewirken darüber hinaus die Bildung von stark oxidierenden Oxidanten, wie OH*, O₂, OHO* sowie dem Reduktor H₂. Diese stark oxidierenden Oxidanten greifen ebenfalls die Abluft an. Durch die schraubenförmige Drehbewegung innerhalb des Gehäuses 600a, 600b des Zyklongaswäschers 6a, 6b wird eine erhöhte Kontaktwahrscheinlichkeit von Verunreinigungen der Abluft mit der chemischen Lösung erzielt, was chemische Reaktionen zwischen der chemischen Lösung und den Verunreinigungen der Abluft unterstützt. Durch die Elektroimpulsdüse wird der durch die Düse strömende Strom an chemischer Lösung unter Strom gesetzt, wodurch Radikale erzeugt werden, die das Aufspalten von Molekülketten unterstützen.

Angesichts der üblicherweise großen Anzahl von Schadstoffen in der Abluft und ihrer geringen Konzentration ist eine Wahrscheinlichkeit einer Kollision üblicherweise relativ gering, so dass eine daraus resultierende chemische Hauptreaktion normalerweise nur teilweise abläuft. Vielmehr können parasitäre Reaktionen auftreten, die zur Bildung toxischer Produkte führen können. Um dies zu vermeiden und um zudem die Effizienz der Zyklongaswäscher 6a, 6b zu steigern, sind die UV-Strahler 605a, 605b sowie IR-Strahler 606a, 606b vorgesehen. Diese sind in einem gewissen Abstand zueinander angeordnet, um Lichtinterferenzen zu vermeiden.

Die Innenwände des oberseitigen zylindrischen Gehäuseabschnitts 601a, 601b sowie die Außenwände des mittiges Ausgangsrohrs 622a, 622b können zusätzlich mit einem Photokatalysator 627a, 627b bzw. 628a, 628b beschichtet sein. Die Wellenlänge der IR-Strahler 606a, 606b wird entsprechend der zu behandelnden Schadstoffart angepasst, sodass die chemischen Bindungen der Moleküle in Schwingungen versetzt werden und am optimalen Punkt aufgetrennt werden. Die UV-Strahler 605a, 605b werden vorzugsweise mit einer geeigneten Wellenlänge betrieben, um Ozon zu erzeugen und organische Stoffe zu oxidieren. Die mit Partikeln aus der Abluft beladene Flüssigkeit strömt entlang des konischen Abschnitts 602a, 602b des jeweiligen Gaswäschers 6a, 6b nach unten und fließt durch einen Dekantierkonus 623a, 623b in den Druckausgleichstank 607a, 607b. Aus dem jeweiligen Druckausgleichstank 607a, 607b wird der Tank 608a, 608b versorgt, der über die Zuleitungen 620a, 620b bzw. 621a, 621b die Düsen 603a, 603b bzw. 612a, 612b versorgt.

Mit dem Zyklongaswäscher 6a wird vorzugsweise eine basische chemische Lösung eingesprüht, um hauptsächlich polare Kohlenwasserstoffmoleküle, wie z.B. Esther, Ether, Säuren usw., aus der Abluft zu entfernen. Mit der basischen chemischen Lösung werden dem Abgasstrom Oxidationsmittel und ein Katalysator (z.B. KMnO₄, oder V₂O₅.) zugeführt.

Mit dem zweiten Zyklongaswäscher 6b wird dem Abgasstrom eine saure chemische Lösung zugeführt, die ebenfalls Oxidationsmittels sowie mindestens einen Katalysator (z.B. K₂Co₂O₇, V₂O₅, oder Na₂CO₃ enthält.

Im Zyklongaswäscher 6b werden Moleküle mit Doppelbindung (Alkene), Dreifachbindung (Alkine), aromatischen Verbindungen, Aminen usw. mit einer sauren chemischen Lösung (z.B. auf Basis von H₂SO₄) mit chemischen Katalysatoren (z.B. V₂O₅) behandelt. Diese Reaktionen bauen unter anderem auch toxische Verbindungen ab, die zuvor durch parasitäre oder andere Reaktionen gebildet worden sein könnten.

Die Tanks 608a, 608b stehen zusätzlich über Verbindungsleitungen 624a, 624b mit der Wasseraufbereitung 10 in Verbindung.

Der jeweilige Zyklongaswäscher 6a bzw. 6b oder die beiden Zyklongaswäscher 6a, 6b in Kombination können auch isoliert, d.h. unabhängig von dem in Fig. 1 beschriebenen Verfahren, zur Behandlung von Abluft eingesetzt werden.

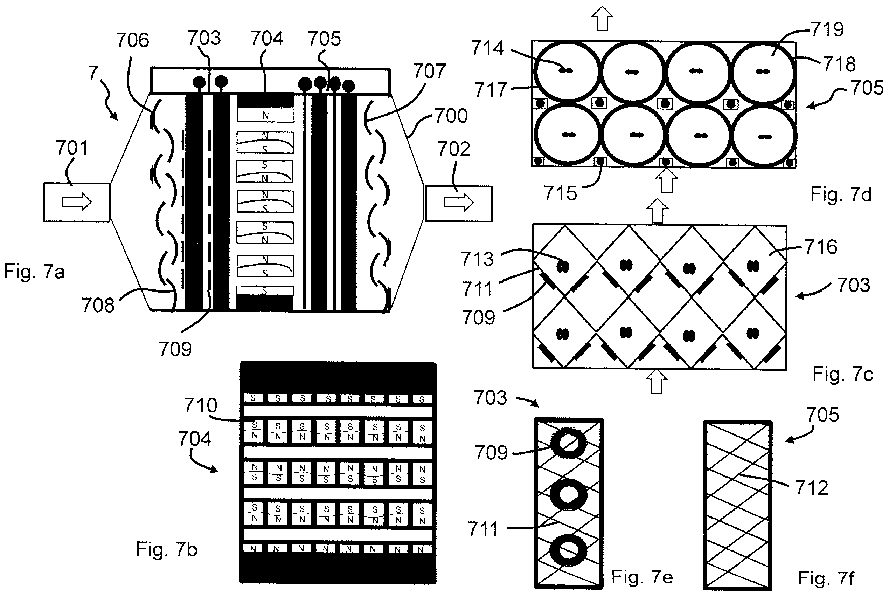

Sobald die Restbestandteile der Abluft den zweiten Zyklongaswäscher 6b verlassen haben, strömt die Abluft gemäß Fig. 1 in eine fünfte Verfahrensstufe 7 bzw. in ein UV-Behandlungsmodul, die bzw. das gemäß Fig. 7 innerhalb eines einen Einlass 701 sowie Auslass 702 umfassendes Gehäuse 700 eine erste Katalysatorkammer 703 mit verteilten Katalysatorelementen 711, eine Magnetanordnung 704 sowie eine zweite Katalysatorkammer 705 mit verteilten Katalysatorelementen 717 umfasst.

Das Gehäuse 700 besitzt im Bereich des Einlasses 701 sowie Auslasses 702 jeweils einen konisch geformten Gehäuseabschnitt.

Das UV-Behandlungsmodul 7 dient vor allem dazu, Kohlenwasserstoffverbindungen (VOCs, NMHCs) in der Abluft durch Photokatalyse zu oxidieren.

Die Magnetanordnung 704 entspricht der Magnetanordnung 404 der dritten Verfahrensstufe 4 bzw. des Plasmamoduls aus Fig. 4, sodass auf dessen Beschreibung Bezug genommen werden kann. Die Wirkung ist ebenfalls identisch.

Die Innenwände des Gehäuses 700 sind reflektierend ausgebildet. Das Gehäuse selbst besteht vorzugsweise aus Edelstahl.

Des Weiteren ist eine erste durchlässige Reflektorwand 706 im Bereich des Einlasses 701 sowie eine zweite durchlässige Reflektorwand 707 im Bereich des Auslasses 702 vorgesehen. Die beiden Spiegelwände 706, 707 entsprechen den Spiegelwänden 306, 307 der zweiten Verfahrensstufe 3 bzw. des Polymerisationsmoduls aus Fig. 3. Der Einfachheit halber wird daher auf die diesbezüglichen Beschreibungen vollinhaltlich Bezug genommen.

Die erste Katalysatorkammer 703 des in Fig. 7a gezeigten UV-Behandlungsmoduls 7 ist in Fig. 7c in einer waagerechten Schnittansicht von Fig. 7a gezeigt. Die erste Katalysatorkammer 703 beinhaltet eine mehrreihige viereckige Rautenstruktur bestehend aus einzelnen Katalysatorelementen 711, die fächerartig in einem bestimmten Winkel zueinander stehen. Jedes einzelne Katalysatorelement 711 besteht aus einem luftdurchlässigen Gittergeflecht, das mit mindestens einem Katalysator beschichtet ist. Vorzugsweise können in einem Mehrschichtverfahren unterschiedliche Katalysatoren, wie z.B. ZnO, TiO₂ usw., als Schicht aufgebracht sein. Im Inneren der Rautenelemente 716 finden sich UV-Lampen 713. Darüber hinaus sind einlassseitig an den Rautenelementen 716 jeweils mehrere Ringmagnete 709 positioniert, wie dies in Fig. 7e gezeigt ist. Diese Ringmagnete 709 haben den Effekt, dass die in der Abluft enthaltenen Verunreinigungen (Schadstoffe) aufgrund ihrer unterschiedlichen magnetischen Eigenschaften (paramagnetisch, diamagnetisch) getrennt werden. Bei dieser Trennung wird Ozon erzeugt, welches in der zweiten Katalysatorkammer 705 die in der Abluft vorhandenen VOCs sowie NMHCs oxidiert. Darüber hinaus können auch Oxydreaktionen stattfinden (wie z.B. SO₂ + hv → SO₂* bzw. NO₂ + hv → NO₂*). Die hierdurch entstehenden Radikale sind ein hervorragendes, reaktives Oxidationsmittel zur Herstellung von Ozon aus Stickstoff unter Einwirkung von UV-Strahlung. Die erzeugte UV-Strahlung bewirkt, dass aufgrund der starken Anziehungskraft und Polarität der Schmutzmoleküle primäre Radikale erzeugt werden, wie z.B.

R-C-O-O-O-CO-R (+UV) → 2R^{*} + 2CO₂

R-O-O--R (+UV) → 2RO^{*}.

In der zweiten Katalysatorkammer 705 ist gemäß Fig. 7d eine mehrreihige Struktur aus Gitterelemente 712 (vgl. Fig. 7f) umfassenden Zylindern 719 vorgesehen, wobei die Zylinder 719 aus halbzylinderförmigen Gitterelementen 718 aufgebaut sein können. In der Mitte der Zylinder 719 befinden sich UV-Lampen 714. Zwischen den Zylindern 719 sind IR-Strahler 715 positioniert. In der zweiten Katalysatorkammer 705 werden VOCs und NMHCs zu H₂O und CO₂ mit dem in der ersten Katalysatorkammer 703 gebildeten Ozon (Os) oxidiert bzw. es reagieren die Radikale, wie R*, NO₂*, SO₂*. Im ersten Fall zerfällt das Ozon oder ein Teil desselben zu Sauerstoff (2O₃ zu 3O₂) oder es reagiert mit Oxiden, z.B. NO + O₃ zu NO₂* + O₂, oder die gebildeten Radikale reagieren entsprechend. Derartige Reaktionen können auch giftige Kohlenwasserstoffradikale bzw. lediglich eine unvollständige Oxidation begründen.

Um die Entstehung giftiger oder schwer zu behandelnder Stoffe zu vermeiden, sind IR-Strahler vorgesehen. Diese beschleunigen eine chemische Reaktion durch Anregung von Bindungen wie C-C, -C=C-, -C=O, -C=N, -C=H. Aktive Photonen hv können auch durch Regeneration von Oxyden zur Anregung von SO₂* → SO₂ + hv zu SO₂* regeneriert werden. Diese Photonen hv sind sehr aktiv bei der Bekämpfung von Kohlenwasserstoffen oder schweren Molekülen.

Sobald das Abgas die fünfte Verfahrensstufe bzw. das UV-Behandlungsmodul 7 passiert hat, besitzt die Abluft bereits einen sehr hohen Reinigungsgrad (z.B. 99% an entfernten Schadstoffen).

Bezugsziffer 8 in Fig. 1 zeigt ein Gebläse, welches dazu dient, die Abluft durch die einzelnen Reinigungsstufen zu befördern, indem die Abluft aus der Lackierkabine 101 bzw. einer alternativen Einrichtung abgesaugt wird.

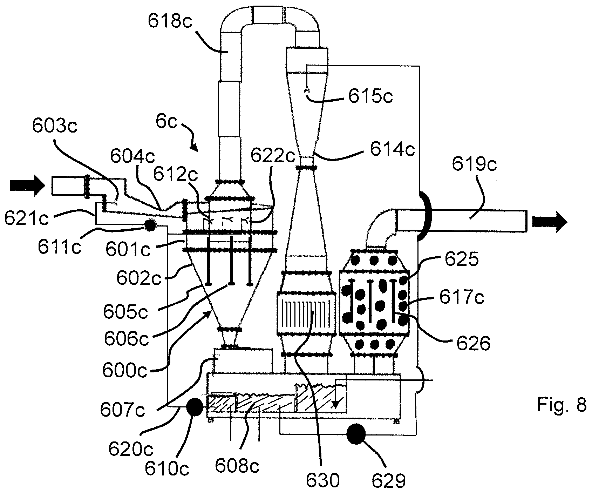

Das Gebläse 8 dient gleichzeitig dazu, die fünfte Verfahrensstufe bzw. das UV-Behandlungsmodul 7 verlassende Restabluft dem dritten Zyklongaswäscher 6c zuzuführen. Der dritte Zyklongaswäscher 6c ist, wie dies auch in Fig. 8 dargestellt ist, entsprechend wie der erste bzw. zweite Zyklongaswäscher 6a bzw. 6b aufgebaut, jedoch lediglich etwas kürzer ausgeführt, um noch höhere Drehgeschwindigkeiten der Abluft zu erreichen. In den sonstigen Merkmalen gleicht der dritte Zyklongaswäscher 6c jedoch den Zyklongaswäschern 6a bzw. 6b, wie sie in Fig. 6 im Detail gezeigt sind.

Die chemische Lösung bzw. Waschlösung, die von der Einspritzdüse 603c bzw. den Düsen 612c versprüht wird, sollte oxidierend und basisch sein (z.B. auf Basis von KOH, NaOH oder Ca(OH)₂) und sollte weitere Additive wie z. B. Jod oder NaOH (z. B. CO₂ + 2NaOH → Na₂CO₃) enthalten. Die Aufgabe der chemischen Lösung bzw. Waschlösung besteht darin, die im Restabgas noch verbliebenen Monooxyde und Dioxyde (z.B. CO, CO₂, NO, NO₂, usw.) zu Trioxyden XO₃ zu oxidieren. Des Weiteren erfolgt ein Ausfällen von Trioxyden in Form von z.B. CO₃-, NO₃-.

Die chemische Lösung bzw. Waschlösung enthält zudem auch chemische Elemente (wie z. B. Jod oder NaOH), um gefährliche Halogenoxyde auszufällen. Die jeweilig ausgefällten Schadstoffe werden in der Reaktionsflüssigkeit aufgefangen und der Abwasseraufbereitung 10 zugeführt.

Das Abluftrohr 618c des Zyklongaswäschers 6c mündet in eine Venturirohranordnung 614c, in der ebenfalls eine Düse 615c für das Einsprühen von chemischer Lösung vorgesehen ist. Neben der Förderpumpe 610c ist hierzu eine weitere Förderpumpe 629 für die Düse 615c vorgesehen.

Nach dem Durchströmen des Gemisches aus Abluft und chemischer Lösung durch das Venturirohr 614c gelangt das Gemisch in eine HV Elektrolyse 630. Die HV Elektrolyse 630 kann wie die Hochspannungselektrolyse 507 im Partikelfilter 5 ausgebildet sein. Die Flüssigkeitsbestandteile werden der Abwasseraufbereitung 10 zugeführt.

Die noch verbleibende Restabluft gelangt anschließend in ein Sicherheitsmodul in Form einer Aktivkohleanordnung 617c. Dieses Modul dient dazu, Produktionsspitzen von Abluft abzufangen. Andererseits stellt das Modul eine Sicherheitseinrichtung dar, falls eine der vorangegangenen Reinigungsstufen ausfallen sollte. Es stellt damit sicher, dass keine ungereinigte Abluft an die Umgebung abgegeben wird.

Die Aktivkohleanordnung 617 umfasst gemäß Fig. 8 zu diesem Zweck eine Vielzahl von Aktivkohlebrocken 625, die entlang des Volumens des Moduls angeordnet sind und von der Abluft umströmt werden. Darüber hinaus sind in dem Modul zusätzlich UV-Strahler 626 vorgesehen, die zur Regeneration der Aktivkohlebrocken 625 dienen, indem sie die aufgenommen Schadstoffe oxidieren. Sofern keine Schadstoffe mehr in den Aktivkohlebrocken 625 vorhanden sind, welche oxidiert werden sollen, wird das bei der Bestrahlung mit UV entstehende Ozon nicht mehr abgebaut. Ein in Fig. 8 nicht dargestellter Sensor kann dies feststellen und ein Signal zur Abschaltung der UV-Bestrahlung generieren.

Wie aus Fig. 1 ersichtlich, strömt die Abluft aus der Aktivkohleanordnung 617 in einen Gaswäscher (Scrubber) 9, welcher ebenfalls als Sicherheitsmodul dient. Der Gaswäscher 9 ist die letzte Station, bevor die Abluft dem Prozess über die Rückführung 904 wieder zugeführt wird. Der Gaswäscher 9 umfasst einen Tank 903 mit Spülflüssigkeit sowie eine Anordnung mehrerer Düsen 902, mit der die Spülflüssigkeit in den Abgasstrom eingesprüht wird. An der Oberseite des Gaswäschers 9 befindet sich ein Tröpfchenabscheider 901, durch den die Abluft strömt, bevor sie die Rückführung 904 erreicht. Bei den Düsen handelt es sich um Hochdruckdüsen, die einen besonders guten Kontakt der Abluft mit der Reinigungsflüssigkeit gewährleisten. Als Reinigungsflüssigkeit kann z.B. Wasser vorgesehen sein. Der Gaswäscher 9 dient als zweite d. h. weitere Sicherheitseinrichtung, falls eine der vorgeschalteten Reinigungsstufen ausfallen sollte bzw. es zu Produktionsspitzen kommen sollte.

Durch die Behandlungsstufen wird sichergestellt, dass die behandelte Abluft ausreichend gereinigt ist, um sie dem Abluftprozess wieder zuführen zu können. Diese Kreislaufführung bewirkt eine erhebliche Reduzierung der Betriebskosten, da anderenfalls die Frischluft bevor diese den Spritzkammern zugeführt wird, hinsichtlich Reinheit, Temperatur und Feuchtigkeit konditioniert werden muss.

Die Anordnung gemäß Fig. 1 zur Durchführung des erfindungsgemäßen Verfahrens kann mit einer Wasseraufbereitung 10 kombiniert werden, die dazu dient, die in den jeweiligen Reinigungsstufen anfallenden flüssigen Bestandteile zu sammeln, diese aufzubereiten und das Wasser über eine Rückführleitung 1016 dem Verfahrensprozess wiederzuzuführen.

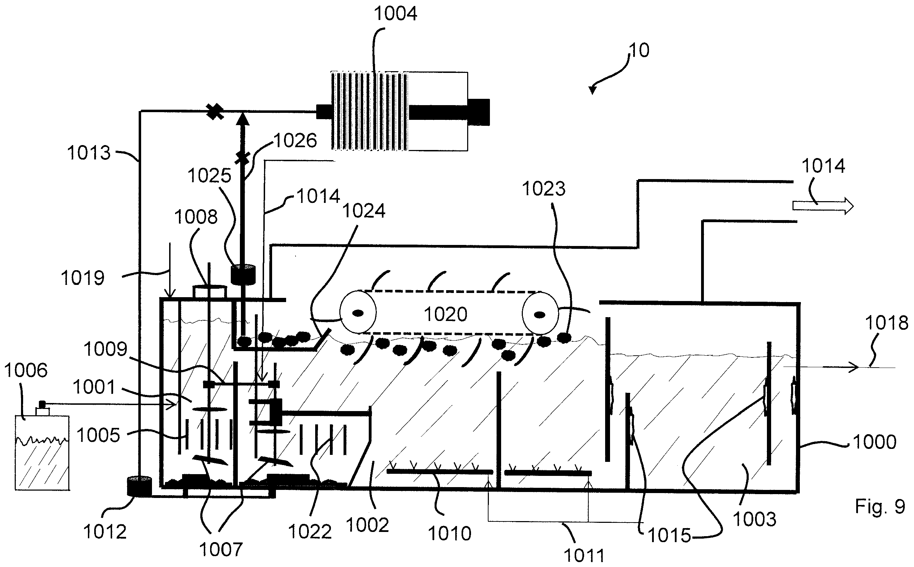

Wie in Fig. 9 dargestellt, umfasst die Wasseraufbereitung 10 ein Becken 1000, welches in drei Kammern 1001, 1002 sowie 1003 unterteilt ist. Des Weiteren umfasst die Wasseraufbereitung 10 eine Filterpresse 1004. In der ersten Kammer 1001 werden zuerst die gelösten Metalle durch Zugabe 1006 von Flockungsmittel (Flocculat und/oder Koalgulat) ausgefällt. Die eigentliche Koagulation geschieht durch die Kombination eines chemischen Koagulationsmittels (z.B. FeCl₃) mit einer ersten Elektrolyseeinrichtung 1005, die die Effektivität der Koagulation verbessert. Zu diesem Zweck wird eine Elektrode aus Eisen als Anode verwendet, um die Fe³⁺-Ionen bereitstellen zu können. Für die Kathode können andere Metalle, wie z.B. Ti, Fe, usw. oder andere elektrisch leitfähige Werkstoffe, wie z.B. Graphit, Keramik usw., verwendet werden. Durch das Kombinieren eines chemischen Flockungsmittels (z.B. gelöste Al³⁺-Ionen) mit einer zweiten Elektrolyseeinrichtung 1022 in der zweiten Kammer 1002 wird auch in diesem Prozessschritt die Effektivität erhöht. Die Anode besteht hierbei vorzugsweise aus Aluminium, um freie Al³⁺-Ionen bereitstellen zu können. Die Kathode kann aus einem anderen Metall, wie z.B. Ti, Fe usw. oder einem anderen elektrisch leitfähigen Werkstoff, wie z.B. Graphit, Aluminium/Keramik-Gemisch usw., bestehen.

In jeder der beiden Kammern 1001 sowie 1002 befindet sich ein Rührer 1007 (z.B. Propeller-Rührer), um die Flüssigkeit kontinuierlich zu durchmischen. Sich bildender Schlamm 1023 soll nach oben treiben. Beide Rührer 1007 werden von einem Motor 1008 angetrieben und sind durch ein Übersetzungsgetriebe 1009 miteinander verbunden. Dadurch hat der Rührer 1007 in der Kammer 1001 (prüfen) eine höhere Drehzahl, um eine Koagulation effektiver ablaufen zu lassen. An der Oberseite der Kammer 1002 befindet sich ein sog. Skimmer 1020, welcher den an der Oberseite aufschwimmenden Schlamm 1023 in einen Schacht 1024 befördert. Mittels einer Pumpe 1025 wird der Schlamm 1023 über die Zuführung 1026 der Filterpresse 1004 zugeführt Bezugszeichen 1019 bezeichnet die Rückführleitung für alle Nassmodule.

Des Weiteren sind am Boden der zweiten Kammer 1002 Düsen 1010 vorgesehen, durch die hindurch Luft in die Flüssigkeit eingeblasen werden kann, um die Flockung zu beschleunigen. Der am Boden der beiden Kammern 1001, 1002 abgesaugte Schlamm und das oben abgeschöpfte Flockulat werden in die Filterpresse 1004 gepumpt. Dort wird das überschüssige Wasser herausgepresst, wobei lediglich die festen Bestandteile zurückbleiben. Das Wasser wird wieder in die Kammer 1002 zurückgeführt.

Die dritte Kammer 1003 ist mit UV-Strahlern 1015 ausgestattet, um eventuell vorhandene Bakterien oder Keime abzutöten. Außerdem dient die dritte Kammer 1003 als Puffer. Das aufbereitete Wasser wird wieder in den Kreislauf zur Abluftreinigung über die Zuführung 1018 zurückgeführt und/oder einzelnen Reinigungsstufen zur Verfügung gestellt. Die Abluft aus der Wasseraufbereitung 10 wird über eine Abluftrückführung 1014 dem Prozess zwischen dem Polymerisationsmodul 3 und dem Plasmamodul 4 wieder zugeführt, siehe auch Fig. 1

Die gesamte Anlage zur Wasseraufbereitung ist modular aufgebaut. Die Anlage kann in einem gemeinsamen Gehäuse untergebracht werden, um eventuell entstehende Abgase aufzufangen und in den Luftstrom vor der Abluftreinigung zuzuführen.

Mit dem vorbeschriebenen Verfahren lässt sich eine Abluftreinigungswirkung in Bezug auf unterschiedliche Schadstoffe in der Abluft, die beispielsweise beim Betrieb einer Lackieranlage anfallen, wie nachstehend wiedergegeben, reduzieren:

| **Schadstoff** | **Gehalt [mg/m^{3]} Abluft unbehandelt** | **Gehalt [mg/m^{3]} Abluft behandelt** | **Reduktion [%]** |
|---|---|---|---|
| **Toluoene** | 0,955 | 0,043 | 95,5 |
| **Dimethylbenzol** | 0,337 | 0,026 | 92,3 |
| **TVOC** | 11,4 | 0,42 | 96,2 |
| **NMHC** | 6,39 | 0,495 | 98,7 |
| **Aceton** | 2,43 | 0,17 | 92,9 |
| **Ethylacetat** | 4,6 | 0,026 | 99,44 |
| **Partikel** | 1,1 | 0,2 | 95 |
| **Benzene** | 0,012 | 0,0057 | 52,5 |

### BEZUGSZEICHENLISTE

- 1: Lackieranlage
- 101: Lackierkabine
- 102: Förderband
- 103: Lackierdüse
- 104: außenseitiges Reservoir
- 105: Hauptluftzufuhr

- 2: Prallblechanordnung
- 201: Gehäuse
- 202: Einlass
- 203: Auslass
- 204: erstes Prallblech
- 205: Perforierung
- 206: Faltung
- 207: Perforierung
- 208: zweites Prallblech
- 209: Faltung
- 210: Spüleinrichtung
- 211: Düse
- 212: US-Vibrator
- 213: US-Welle
- 214: Spülstrom

- 3: Polymerisationsmodul
- 301: Gehäuse
- 302: Einlass
- 303: Auslass
- 304: UV-/IR-Lampe
- 305: Mikrowellenstrahler
- 306: erste Reflektorwand
- 307: zweite Reflektorwand
- 308: Lamelle

- 4: Plasmamodul
- 400: Gehäuse
- 401: Einlass
- 402: Auslass
- 403: Durchlasskanal
- 404: Magnetanordnung
- 405: Kathodenröhre
- 406: Anode
- 407: UV-Lichtelement
- 408: Tröpfchen-Abschneider
- 409: Schallwellenquelle
- 410: Rückführungsleitung
- 411: Resonanzreflektor

- 5: Partikelfilter
- 500: Einlas
- 501: Auslass
- 502: konischer Gehäuseabschnitt
- 503: konischer Gehäuseabschnitt
- 504: zylindrischer Gehäuseabschnitt
- 505: zylindrischer Gehäuseabschnitt
- 506: Agglomerationskammer
- 507: Hochspannungselektrolyse
- 508: Ultraschalldüse
- 509: Druckluft
- 510: Dekantiereinrichtung
- 511: Waschlösung
- 512: Elektrode
- 513: Gehäuse
- 514: Aufnahme von flüssigen und festen Bestandteilen

- 6a: Zylkongaswäscher
- 6b: Zyklongaswäscher
- 6c: Zyklongaswäscher
- 600a: Gehäuse
- 600b: Gehäuse
- 600c: Gehäuse
- 601a: oberseitiger Gehäuseabschnitt
- 601b: oberseitiger Gehäuseabschnitt
- 601c: oberseitiger Gehäuseabschnitt
- 602a: unterseitiger Gehäuseabschnitt
- 602b: unterseitiger Gehäuseabschnitt
- 602c: unterseitiger Gehäuseabschnitt
- 603a: Einspritzdüse
- 603b: Einspritzdüse
- 603c: Einspritzdüse
- 604a: Halbventurirohr
- 604b: Halbventurirohr
- 604c: Halbventurirohr
- 605a: UV-Strahler
- 605b: UV-Strahler
- 605c: UV-Strahler
- 606a: IR-Strahler
- 606b: IR-Strahler
- 606c: IR-Strahler
- 607a: Druckausgleichstank
- 607b: Druckausgleichstank
- 607c: Druckausgleichstank
- 608a: Druckausgleichstank
- 608b: Druckausgleichsank
- 608c: Druckausgleichstank
- 609a: Tank
- 609b: Tank
- 609c: Tank
- 610a: Förderpumpe
- 610b: Förderpumpe
- 610c: Förderpumpe
- 611a: Hochdruck-Förderpumpe
- 611b: Hochdruck-Förderpumpe
- 611c: Hochdruck-Förderpumpe
- 612a: Düse
- 612b: Düse
- 612c: Düse
- 613a: Tröpfchenabscheider
- 613b: Tröpfchenabscheider
- 614c: Venturirohr
- 615c: Düse
- 616c: Elektrolyseanordnung
- 617c: Aktivkohleanordnung
- 618c: Abluftrohr
- 619c: Abluftrohr
- 620a: erste Zuleitung
- 620b: erste Zuleitung
- 620c: erste Zuleitung
- 621a: zweite Zuleitung
- 621b: zweite Zuleitung
- 621c: zweite Zuleitung
- 622a: mittiges Ausgangsrohr
- 622b: mittiges Ausgangsrohr
- 622c: mittiges Ausgangsrohr
- 623a: Dekantierkonus
- 623b: Dekantierkonus
- 624a: Verbindungsleitung
- 624b: Verbindungsleitung
- 625: Aktivkohlebrocken
- 626: UV-Strahler
- 627a: Photokatalysator
- 627b: Photokatalysator
- 628a: Photokatalysator
- 628b: Photokatalysator
- 629: Förderpumpe
- 630: HV Elektrolyse

- 7: UV-Behandlungsmodul
- 700: Gehäuse
- 701: Einlass
- 702: Auslass
- 703: erste Katalysatorkammer
- 704: Magnetanordnung
- 705: zweite Katalysatorkammer
- 706: erste durchlässige Reflektorwand
- 707: zweite durchlässige Reflektorwand
- 708: Lamelle
- 709: Ringmagnet
- 710: Durchlasskanal
- 711: Katalysatorelement
- 712: Gitterelement
- 713: UV-Lampe
- 714: UV-Lampe
- 715: IR-Strahler
- 716: Rautenelement
- 717: Katalysatorelement
- 718: zylinderförmiges Gitterelement
- 719: Zylinder

- 8: Gebläse

- 9: Gaswäscher
- 901: Tröpfchenabscheider
- 902: Düse
- 903: Tank (Spülflüssigkeit)
- 904: Rückführung der Abluft

- 10: Wasseraufbereitung
- 1000: Becken
- 1001: Kammer
- 1002: Kammer
- 1003: Kammer
- 1004: Filterpresse
- 1005: erste Elektrolyseeinrichtung
- 1006: Zuführung Flockungsmittel
- 1007: Rührer
- 1008: Motor
- 1009: Übersetzungsgetriebe
- 1010: Düse
- 1011: Luftzuführung
- 1012: Saugpumpe
- 1013: Zuführung
- 1014: Abluftrückführung
- 1015: UV-Strahler
- 1016: Rückführleitung
- 1017: Abzweigung zu 6b
- 1018: Rückführleitung Wasser
- 1019: Rückführleitung von 1
- 1020: Skimmer
- 1021: Rückführleitung
- 1022: zweite Elektrolyseeinrichtung
- 1023: Schlamm
- 1024: Schacht
- 1025: Pumpe

## Patentansprüche

1. Verfahren zur Abluftreinigung, vorzugsweise zur Abluftreinigung einer Lackieranlage, mit
einer ersten Verfahrensstufe (2), in der Partikel des Abgasstroms aus dem Abgasstrom hydrodynamisch abgetrennt werden,
einer zweiten Verfahrensstufe (3), in der der Abgasstrom mit Lichtstrahlung, vorzugsweise mit UV- und/oder IR-Strahlung und/oder mit einer Mikrowellenenergie beaufschlagt wird,
einer dritten Verfahrensstufe (4), in der der Abgasstrom durch eine Magnetanordnung und anschließend durch eine Plasmaröhren-Anordnung (405) hindurchströmt,
einer vierten Verfahrensstufe (6a, 6b), in der der Abgasstrom einen ersten Zyklongaswäscher (6a), in dem der Abgasstrom unter Lichtstrahlung vorzugsweise UV- und/oder IR-Strahlung mit einer vorzugsweise basischen chemischen Lösung kontaktiert wird, und einen zweiten Zyklongaswäscher (6b), in dem der Abgasstrom unter Lichtstrahlung vorzugsweise UV- und/oder IR-Strahlung mit einer vorzugsweise sauren chemischen Lösung kontaktiert wird, durchströmt, sowie
einer fünften Verfahrensstufe (7), in der der Abgasstrom eine erste Katalysatorkammer (703) mit verteilten Katalysatorelementen (711), eine Magnetanordnung (704) sowie eine zweite Katalysatorkammer (705) mit verteilten Katalysatorelementen (717 ) durchströmt.

2. Verfahren nach Anspruch 1, **dadurch gekennzeichnet, dass** der Abgasstrom die einzelnen Verfahrensstufen in folgender Reihenfolge nacheinander durchströmt: erste Verfahrensstufe (2), zweite Verfahrensstufe (3), dritte Verfahrensstufe (4), vierte Verfahrensstufe (6a, 6b) sowie fünfte Verfahrensstufe (7).

3. Verfahren nach Anspruch 1 oder 2, **dadurch gekennzeichnet, dass** in einer sechsten Verfahrensstufe (5) eine ionische Lösung in den Abgasstrom unter Ultraschallenergie eingesprüht wird, der Abgasstrom anschließend eine Ausfällkammer durchströmt und anschließend einer Hochvoltelektrolyse unterzogen wird.

4. Verfahren nach mindestens einem der vorhergehenden Ansprüche,
**dadurch gekennzeichnet, dass** der Abgasstrom in einer siebten Verfahrensstufe (6c) einen dritten Zyklongaswäscher (6c) durchströmt, in dem der Abgasstrom einem photokatalytischen Nassprozess zur Reduktion und Ausfällung von Oxiden unterzogen wird.

5. Verfahren nach Anspruch 3 oder 4, **dadurch gekennzeichnet, dass** sich die sechste Verfahrensstufe (5) zwischen der dritten (4) und vierten Verfahrensstufe (6a, 6b) befindet, und/oder sich die siebte Verfahrensstufe (6c) an die fünfte Verfahrensstufe (7) anschließt.

6. Verfahren nach mindestens einem der vorhergehenden Ansprüche,
**dadurch gekennzeichnet, dass** die basische bzw. saure chemische Lösung im Zuführungsbereich zum zylindrischen Gehäuseteil und/oder innerhalb des zylindrischen Gehäuseteils des jeweiligen Zyklongaswäschers (6a und/oder 6b und/oder 6c) eingesprüht wird.

7. Verfahren nach mindestens einem der vorhergehenden Ansprüche, **dadurch gekennzeichnet, dass** der Abgasstrom im Zuführungsbereich zum zylindrischen Gehäuseteil des jeweiligen Zyklongaswäschers (6a und/oder 6b und/oder 6c) mittels einer Elektropulsdüse vorzugsweise vor oder im Bereich einer Venturi- oder Halbventuridüse vernebelt wird.

8. Verfahren nach mindestens einem der vorhergehenden Ansprüche,
**dadurch gekennzeichnet, dass** mit der basischen chemischen Lösung dem Abgasstrom Oxidationsmittel und/oder ein Katalysator zugeführt werden.

9. Verfahren nach mindestens einem der vorhergehenden Ansprüche,
**dadurch gekennzeichnet, dass** mit der sauren chemischen Lösung dem Abgasstrom Oxidationsmittel und/oder ein Katalysator zugeführt werden.

10. Verfahren nach mindestens einem der vorhergehenden Ansprüche, **dadurch gekennzeichnet, dass** der Abgasstrom in der ersten Verfahrensstufe (2) auf eine mit Perforationen versehene, vorzugsweise mit einer Waschflüssigkeit zur Bildung eines Waschflüssigkeitsvorhangs beaufschlagte, vorzugsweise ein erstes sowie zweites Faltblech umfassende, Prallblechanordnung geleitet wird.

11. Verfahren nach Anspruch 10, **dadurch gekennzeichnet, dass** die Prallblechanordnung mit Ultraschall beschallt wird.

12. Verfahren nach mindestens einem der vorhergehenden Ansprüche, **dadurch gekennzeichnet, dass** der Magnetanordnung (404) der dritten Verfahrensstufe (4) ein Tropfenabscheider (408) vorgeschaltet ist.

13. Verfahren nach mindestens einem der vorhergehenden Ansprüche, **dadurch gekennzeichnet, dass** das Plasma in der dritten Verfahrensstufe (4) mit Licht, vorzugsweise UV-Licht und/oder IR-Licht bestrahlt wird.

14. Verfahren nach mindestens einem der vorhergehenden Ansprüche, **dadurch gekennzeichnet, dass** das Plasma in der dritten Verfahrensstufe (4) mit Ultraschall beschallt wird.

15. Verfahren nach mindestens einem der vorhergehenden Ansprüche, **dadurch gekennzeichnet, dass** in der ersten Katalysatorkammer (703) der fünften Verfahrensstufe (7) unter UV-Lichtbestrahlung Ozon erzeugt wird und in der zweiten Katalysatorkammer (705) das Ozon unter UV-Lichtbestrahlung Bestandteile des Abgasstroms oxidiert.

16. Verfahren nach mindestens einem der vorhergehenden Ansprüche, **dadurch gekennzeichnet, dass** in einer Wasseraufbereitungsstufe (10) das Wasser von den an den einzelnen Verfahrensstufen abgetrennten fluiden und festen Bestandteilen aufgefangen und gereinigt wird und dem Prozess der Abluftreinigung wieder zugeführt wird.

## Claims

1. A method for exhaust air purification, preferably for exhaust air purification of a painting plant, with
a first process step (2) where exhaust air particles are hydrodynamically separated from the exhaust airflow
a second process step (3) where the exhaust airflow is exposed to light radiation, preferably UV and/or IR radiation and/or microwave energy,
a third process step (4) where the exhaust airflow is led through a magnet arrangement and subsequently through a plasma tube arrangement (405)
a fourth process step (6a, 6b) where the exhaust airflow flows through a first cyclonic gas scrubber (6a) where the exhaust airflow under light radiation, preferably under UV and/or IR radiation, comes in contact with a preferably alkaline chemical solution, and a second cyclonic gas scrubber (6b) where the exhaust airflow under light radiation, preferably under UV and/or IR radiation, comes in contact with a preferably acidic chemical solution, and
a fifth process step (7) where the exhaust airflow passes through a first catalytic chamber (703) with distributed catalytic elements (711), a magnet arrangement (704) as well as a second catalytic chamber (705) with distributed catalytic elements (717).

2. The method of Claim 1, **characterized in that** the exhaust airflow passes the individual process steps in the following order: first process step (2), second process step (3), third process step (4), fourth process step (6a, 6b) and fifth process step (7).

3. The method of Claim 1 or 2, **characterized in that** in a sixth process step (5) an ionic solution is sprayed into the exhaust airflow using ultrasonic energy, the exhaust airflow then passes a precipitation chamber and subsequently undergoes a high-voltage electrolysis.

4. The method of at least one of the above Claims, **characterized in that** in a seventh process step (6c) the exhaust airflow passes a third cyclonic gas scrubber (6c) where the exhaust airflow is exposed to a photocatalytic wet process for the reduction and precipitation of oxides.

5. The method of Claim 3 or 4, **characterized in that** the sixth process step (5) is between the third (4) and the fourth (6a, 6b) process step and/or the seventh process step (6c) follows the fifth process step (7).

6. The method of at least one of the above Claims, **characterized in that** the alkaline or acidic chemical solution is sprayed into the inlet area of the cylindrical part of the housing and/or inside the cylindrical part of the housing of the relevant cyclonic gas scrubber (6a and/or 6b and/or 6c).

7. The method of at least one of the above Claims, **characterized in that** the exhaust air is nebulized in the inlet area of the cylindrical part of the housing of the relevant cyclonic gas scrubber (6a and/or 6b and/or 6c) using an electrostatic nozzle, preferably in front of or near a venturi or semi-venturi nozzle.

8. The method of at least one of the above Claims, **characterized in that** oxidants and/or a catalyst are fed into the exhaust airflow together with the alkaline chemical solution.

9. The method of at least one of the above Claims, **characterized in that** oxidants and/or a catalyst are fed into the exhaust airflow together with the acidic chemical solution.

10. The method of at least one of the above Claims, **characterized in that** in the first process step (2) the exhaust airflow is led onto a baffle plate arrangement provided with perforations to which preferably a washing liquid is applied to form a washing liquid curtain and comprising a first and a second folding plate.

11. The method of at least one of the above Claims, **characterized in that** the baffle plate arrangement in treated with ultrasonic.

12. The method of at least one of the above Claims, **characterized in that** a droplet separator (408) is fitted upstream of the magnet arrangement (404) in the third process step (4).

13. The method of at least one of the above Claims, **characterized in that** in the third process step (4) plasma is radiated with light, preferably UV light and/or IR light.

14. The method of at least one of the above Claims, **characterized in that** in the third process step (4) plasma is treated with ultrasonic.

15. The method of at least one of the above Claims, **characterized in that** ozone is generated in the first catalytic chamber (703) of the fifth process step (7) and that in the second catalytic chamber (705) the ozone generated oxidizes constituents of the exhaust airflow under UV and/or IR radiation.

16. The method of at least one of the above Claims, **characterized in that** in a water purification step (10) the water separated from the fluid and solid constituents in the individual purification steps is collected and purified and recirculated into the process of exhaust air purification.

## Revendications

1. Procédé pour la purification d'air d'échappement, de préférence pour la purification d'air d'échappement d'une installation de peinture, avec
une première étape de procédé (2), dans laquelle des particules du courant de gaz d'échappement sont séparées hydrodynamiquement du courant de gaz d'échappement,
une deuxième étape de procédé (3), dans laquelle le courant de gaz d'échappement est exposé à un rayonnement lumineux, de préférence à un rayonnement UV et/ou IR et/ou à une énergie de micro-ondes,
une troisième étape de procédé (4), dans laquelle le courant de gaz d'échappement traverse un agencement magnétique et ensuite un agencement de tubes à plasma (405),
une quatrième étape de procédé (6a, 6b) dans laquelle le courant de gaz d'échappement traverse un premier épurateur de gaz cyclonique (6a) dans lequel le courant de gaz d'échappement est mis en contact avec une solution chimique, de préférence basique, sous rayonnement lumineux, de préférence rayonnement UV et/ou IR, et un deuxième épurateur de gaz cyclonique (6b) dans lequel le courant de gaz d'échappement est mis en contact avec une solution chimique, de préférence acide, sous rayonnement lumineux, de préférence rayonnement UV et/ou IR, ainsi que
une cinquième étape de procédé (7) dans laquelle le courant de gaz d'échappement traverse une première chambre de catalyseur (703) avec des éléments catalytiques répartis (711), un agencement magnétique (704) ainsi qu'une deuxième chambre de catalyseur (705) avec des éléments catalytiques répartis (717).

2. Procédé selon la revendication 1, **caractérisé en ce que** le courant de gaz d'échappement traverse successivement les étapes de procédé individuelles dans l'ordre suivant : première étape de procédé (2), deuxième étape de procédé (3), troisième étape de procédé (4), quatrième étape de procédé (6a, 6b) ainsi que cinquième étape de procédé (7).

3. Procédé selon la revendication 1 ou 2, **caractérisé en ce que,** dans une sixième étape de procédé (5), une solution ionique est injectée dans le courant de gaz d'échappement sous énergie ultrasonique, le courant de gaz d'échappement traversant ensuite une chambre de précipitation et étant ensuite soumis à une électrolyse à haute tension.

4. Procédé selon au moins l'une quelconque des revendications précédentes, **caractérisé en ce que,** dans une septième étape de procédé (6c), le courant de gaz d'échappement traverse un troisième épurateur de gaz cyclonique (6c) dans lequel le courant de gaz d'échappement est soumis à un processus photocatalytique humide pour réduire et précipiter les oxydes.

5. Procédé selon la revendication 3 ou 4, **caractérisé en ce que** la sixième étape de procédé (5) se trouve entre la troisième (4) et la quatrième étape de procédé (6a, 6b), et/ou la septième étape de procédé (6c) fait suite à la cinquième étape de procédé (7).

6. Procédé selon au moins l'une quelconque des revendications précédentes, **caractérisé en ce que** la solution chimique basique ou acide est injectée dans la zone d'amenée vers la partie de boîtier cylindrique et/ou à l'intérieur de la partie de boîtier cylindrique de l'épurateur de gaz cyclonique respectif (6a et/ou 6b et/ou 6c).

7. Procédé selon au moins l'une quelconque des revendications précédentes, **caractérisé en ce que** le courant de gaz d'échappement est nébulisé dans la zone d'amenée vers la partie de boîtier cylindrique de l'épurateur de gaz cyclonique respectif (6a et/ou 6b et/ou 6c) au moyen d'une buse à impulsions électriques, de préférence avant ou dans la zone d'un buse venturi ou semi-venturi.

8. Procédé selon au moins l'une quelconque des revendications précédentes, **caractérisé en ce qu'**avec la solution chimique basique, des agents oxydants et/ou un catalyseur sont ajoutés au courant de gaz d'échappement.

9. Procédé selon au moins l'une quelconque des revendications précédentes, **caractérisé en ce qu'**avec la solution chimique acide, des agents oxydants et/ou un catalyseur sont ajoutés au courant de gaz d'échappement.

10. Procédé selon au moins l'une quelconque des revendications précédentes, **caractérisé en ce que,** dans la première étape de procédé (2), le courant de gaz d'échappement est dirigé sur un agencement de tôles déflectrices pourvu de perforations, de préférence chargé avec un liquide de lavage pour former un rideau de liquide de lavage, comprenant de préférence une première ainsi qu'une deuxième tôle pliée.

11. Procédé selon la revendication 10, **caractérisé en ce que** l'agencement de tôles déflectrices est soumis à des ultrasons.

12. Procédé selon au moins l'une quelconque des revendications précédentes, **caractérisé en ce qu'**un séparateur de gouttes (408) est monté en amont de l'agencement magnétique (404) de la troisième étape de procédé (4).

13. Procédé selon au moins l'une quelconque des revendications précédentes, **caractérisé en ce que** le plasma dans la troisième étape de procédé (4) est exposé à de la lumière, de préférence de la lumière UV et/ou de la lumière IR.

14. Procédé selon au moins l'une quelconque des revendications précédentes, **caractérisé en ce que** le plasma dans la troisième étape de procédé (4) est soumis à des ultrasons.

15. Procédé selon au moins l'une quelconque des revendications précédentes, **caractérisé en ce que,** dans la première chambre de catalyseur (703) de la cinquième étape de procédé (7), de l'ozone est produit sous exposition à de la lumière UV et, dans la deuxième chambre de catalyseur (705), l'ozone oxyde des constituants du courant de gaz d'échappement sous exposition à de la lumière UV.

16. Procédé selon au moins l'une quelconque des revendications précédentes, **caractérisé en ce que,** dans une étape de conditionnement d'eau (10), l'eau est collectée et purifiée à partir des constituants liquides et solides séparés au niveau des étapes de procédé individuelles et est réintroduite dans le processus de purification d'air d'échappement.
